(19) Europäisches Patentamt
European Patent Office
Office européen des brevets

(11) EP 4 791 003 A1

(12) EUROPEAN PATENT APPLICATION
published in accordance with Art. 153(4) EPC

(43) Date of publication:
**12.08.2026 Bulletin 2026/33**

(21) Application number: **23954875.3**

(22) Date of filing: **06.10.2023**

(51) International Patent Classification (IPC):
***H04N 19/85*** *(2014.01)* ***H04N 19/105*** *(2014.01)*
***H04N 19/513*** *(2014.01)* ***H04N 19/167*** *(2014.01)*

(52) Cooperative Patent Classification (CPC):
**H04N 19/105; H04N 19/167; H04N 19/513; H04N 19/85**

(86) International application number:
**PCT/KR2023/015442**

(87) International publication number:
**WO 2025/075227 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **LG Electronics Inc.**
**Seoul 07336 (KR)**

(72) Inventors:
- **KIM, Chulkeun**
  **Seoul 06772 (KR)**
- **LIM, Jaehyun**
  **Seoul 06772 (KR)**
- **GWAK, Donggyu**
  **Seoul 06772 (KR)**
- **NAM, Jung Hak**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

# (54) IMAGE DATA PROCESSING METHOD AND DEVICE, RECORDING MEDIUM STORING BITSTREAM, AND BITSTREAM TRANSMISSION METHOD

(57) Provided are an image data processing method and device, a recording medium on which a bitstream generated by means of an image data processing method is stored, and a bitstream transmission method. An image data processing method, according to the present disclosure, comprises the steps of: decoding image data obtained from a bitstream; obtaining information about an optimization method of the image data; and post-processing the decoded image data on the basis of the information about the optimization method, wherein the information about the optimization method may include optimization attribute information indicating a type of at least one optimization method applied to the image data.

FIG. 21

Start
Decode image data
S2110
Obtain optimization information
S2120
Post-process decoded image data based on optimization information
S2130
End

EP 4 791 003 A1

## Description

[Technical Field]

The present disclosure relates to an image data processing method and apparatus, and more specifically, relates to an image data processing method and apparatus based on image data optimization, a recording medium for storing a bitstream generated by the image data processing method/apparatus of the present disclosure and a bitstream transmission method.

[Background Art]

Along with the development of machine learning technology, the demand for image processing-based artificial intelligence services is increasing. In order to effectively process a large amount of image data required for artificial intelligence services within limited resources, an image compression technology optimized for performing machine tasks is essential. However, since the existing image compression technologies have been developed with the goal of high-resolution and high-quality image processing for human vision, there is a problem that they are not suitable for artificial intelligence services. Accordingly, research and development on new machine-oriented image compression technologies suitable for artificial intelligence services are actively being conducted.

[Disclosure]

[Technical Problem]

The present disclosure is to provide an image data processing method and apparatus with improved processing efficiency.

In addition, the present disclosure is to provide an image data processing method and apparatus for performing pre/post-processing on an input source based on a predetermined optimization method.

In addition, the present disclosure is to provide an image data processing method and apparatus based on a predetermined interface that defines optimization information.

In addition, the present disclosure is to provide an image processing method and apparatus capable of removing the noise of an input source and improving information based on a predetermined optimization method.

In addition, the present disclosure is to provide a method for transmitting a bitstream generated by an image processing method or apparatus according to the present disclosure.

In addition, the present disclosure is to provide a recording medium for storing a bitstream generated by an image processing method or apparatus according to the present disclosure.

In addition, the present disclosure is to provide a recording medium for storing a bitstream received and decoded by an image processing method according to the present disclosure and used for image reconstruction.

The technical problems to be achieved in the present disclosure are not limited to the technical problems described above, and other technical problems not described may be clearly understood by those of ordinary skill in the art from the following descriptions.

[Technical Solution]

An image data processing method according to an aspect of the present disclosure includes decoding image data obtained from a bitstream, obtaining information related to an optimization method of the image data, and post-processing the decoded image data based on the information related to the optimization method, wherein the information related to the optimization method may include optimization property information representing a type of at least one optimization method applied to the image data.

A receiving apparatus according to another aspect of the present disclosure includes a memory and at least one processor, and the at least one processor decodes image data obtained from a bitstream, obtains information related to an optimization method of the image data and post-processes the decoded image data based on the information related to the optimization method, wherein the information related to the optimization method may include optimization property information representing a type of at least one optimization method applied to the image data.

An image data processing method according to another aspect of the present disclosure includes determining an optimization method of image data, preprocessing the image data based on the optimization method, and encoding the preprocessed image data and information related to the optimization method, wherein the information related to the optimization method may include optimization property information representing a type of at least one optimization method applied to the image data.

A transmitting apparatus according to another aspect of the present disclosure includes a memory and at least one processor, and the at least one processor determines an optimization method of image data, preprocesses the image data based on the optimization method and encodes the preprocessed image data and information related to the optimization method, wherein the information related to the optimization method may include optimization property information representing a type of at least one optimization method applied to the image data.

A recording medium according to another aspect of the present disclosure may store a bitstream generated by the image processing method or transmitting apparatus of the present disclosure.

A bitstream transmission method according to another aspect of the present disclosure may transmit a bitstream generated by the image processing method or transmitting apparatus of the present disclosure to a receiving apparatus.

The features briefly summarized above for the present disclosure are merely an exemplary aspect of a detailed description of the present disclosure described below, and do not limit the scope of the present disclosure.

[Technical Effects]

According to the present disclosure, an image data processing method and apparatus with improved processing efficiency may be provided.

In addition, according to the present disclosure, an image data processing method and apparatus for performing pre/post-processing on an input source based on a predetermined optimization method may be provided.

In addition, according to the present disclosure, an image data processing method and apparatus based on a predetermined interface that defines optimization information may be provided.

In addition, according to the present disclosure, an image processing method and apparatus capable of removing the noise of an input source and improving information based on a predetermined optimization method may be provided.

In addition, according to the present disclosure, a method for transmitting a bitstream generated by an image processing method or apparatus according to the present disclosure may be provided.

In addition, according to the present disclosure, a recording medium for storing a bitstream generated by an image processing method or apparatus according to the present disclosure may be provided.

In addition, according to the present disclosure, a recording medium for storing a bitstream received and decoded by a receiving apparatus according to the present disclosure and used for image reconstruction may be provided.

The effects obtainable from the present disclosure are not limited to the effects described above, and other effects not described may be clearly understood by those of ordinary skill in the art from the following descriptions.

[Brief Description of Drawings]

FIG. 1 is a diagram schematically showing a VCM system to which embodiments of the present disclosure may be applied.

FIG. 2 is a diagram schematically showing a VCM pipeline structure to which embodiments of the present disclosure may be applied.

FIG. 3 is a diagram schematically showing an image/video encoder to which embodiments of the present disclosure may be applied.

FIG. 4 is a diagram schematically showing an image/video decoder to which embodiments of the present disclosure may be applied.

FIG. 5 is a flowchart schematically showing a feature/feature map encoding procedure to which embodiments of the present disclosure may be applied.

FIG. 6 is a flowchart schematically showing a feature/feature map decoding procedure to which embodiments of the present disclosure may be applied.

FIG. 7 is a diagram illustrating an example of a VCM layer structure.

FIG. 8 is a diagram representing an example of a VCM bitstream composed of an encoded abstracted feature and NNAL information.

FIG. 9 is a diagram for describing various issues in a VCM system.

FIGS. 10 and 11 are diagrams representing a VCM system according to an embodiment of the present disclosure.

FIGS. 12 and 13 are diagrams representing a hierarchical interface structure between an optimizer and an encoder.

FIG. 14 is an example of expressing the location and size of an ROI area within an input source in a pixel unit.

FIG. 15 is an example of expressing the location and size of an ROI area within an input source in a predetermined unit.

FIG. 16 is a diagram representing a process of optimizing an input source and transmitting it to an encoder.

FIG. 17 is a diagram representing a process of encoding the optimized input source of FIG. 16.

FIG. 18 is a diagram representing the application order of an optimization method according to an embodiment of the

present disclosure.

FIG. 19 is a diagram representing a VCM system according to an embodiment of the present disclosure.

FIG. 20 is a diagram for describing an optimization setting process according to an embodiment of the present disclosure.

FIG. 21 is a flowchart representing an image data processing method according to an embodiment of the present disclosure.

FIG. 22 is a flowchart representing an image data processing method according to an embodiment of the present disclosure.

FIG. 23 is a diagram illustrating an example of a content streaming system to which embodiments of the present disclosure may be applied.

FIG. 24 is a diagram illustrating another example of a content streaming system to which embodiments of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

The present disclosure may be applied to a method disclosed in the Versatile Video Coding (VVC) standard and/or the Video Coding for Machines (VCM) standard. In addition, the present disclosure may be applied to a method disclosed in the essential video coding (EVC) standard, the AOMedia Video 1 (AV1) standard, the 2nd generation of audio video coding standard (AVS2) or the next-generation video/image coding standard (e.g., H.267 or H.268, etc.).

The present disclosure presents various embodiments related to video/image coding, and unless otherwise stated, the embodiments may be performed in combination with each other. In the present disclosure, "video" may refer to a set of images in sequence over time. "Image" may be information generated by artificial intelligence (AI). Input information used in a process in which AI performs a series of tasks, information generated in an information processing process and output information may be used as an image. In the present disclosure, "picture" generally refers to a unit representing a single image at a specific point in time and a slice/a tile is an encoding unit that constructs a part of a picture. One picture may be composed of at least one slice/tile. In addition, a slice/a tile may include at least one coding tree unit (CTU). The CTU may be partitioned into at least one CU. A tile is a rectangular area existing within a specific tile row and a specific tile column within a picture, and may be composed of a plurality of CTUs. A tile column may be defined as a

rectangular area of CTUs, and may have the same height as the height of a picture and have a width specified by a syntax element signaled from a bitstream part such as a picture parameter set. A tile row may be defined as a rectangular area of CTUs, and may have the same width as the width of a picture and a height specified by a syntax element signaled from a bitstream part such as a picture parameter set. A tile scan is a predetermined sequential ordering method of CTUs that partition a picture. Here, CTUs may be sequentially ordered according to a CTU raster scan within a tile, and tiles within a picture may be sequentially ordered according to raster scan order of tiles in a picture. A slice may include an integer number of complete tiles or an integer number of sequential complete CTU rows within a tile of a picture. A slice may be included exclusively in a single NAL unit. One picture may be composed of at least one tile group. One tile group may include at least one tile. A brick may represent a rectangular area of CTU rows within a tile in a picture. A tile may include at least one brick. A brick may represent a rectangular area of CTU rows within a tile. One tile may be partitioned into a plurality of bricks, and each brick may include at least one CTU row belonging to a tile. A tile that is not partitioned into a plurality of bricks may also be treated as a brick.

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In an embodiment, especially when applied to VCM, a pixel/a pixel value may represent the pixel/pixel value of a component generated through the independent information or combination, synthesis and analysis of each component when there is a picture composed of a set of components with different characteristics and meaning. For example, in RGB input, it may represent only the pixel/pixel value of R, may represent only the pixel/pixel value of G, or may represent only the pixel/pixel value of B. For example, it may represent only the pixel/pixel value of a luma component synthesized by using R, G and B components. For example, it may represent only the pixel/pixel value of information or an image extracted through the analysis of R, G and B components.

In the present disclosure, "unit" may refer to a basic unit of image processing. A unit may include at least one of a specific area of a picture or information related to the area. One unit may include one luma block and two chroma (e.g., Cb, Cr) blocks. Depending on the context, the term "unit" may be used interchangeably with "sample array," "block," "area," etc. In general, an M×N block may include a set (or array) of samples (or a sample array) or a set (or array) of transform coefficients, consisting of M columns and N rows. In an embodiment, in particular, when it is applied to VCM, a unit may represent a basic unit including information for performing a specific task.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In addition, in the present disclosure, "current block" may refer to "luma block of current block" unless it is explicitly stated as a chroma block. "Chroma block of current block" may be expressed by explicitly including an explicit description of a chroma block such as "chroma block" or "current chroma block".

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

The present disclosure relates to video/image coding for machines (VCM).

VCM refers to a compression technology that encodes/decodes a part of a source image/video or information obtained from a source image/video for the purpose of machine vision. In VCM, an encoding/decoding target may be referred to as a feature. A feature may refer to information extracted from a source image/video based on a task purpose, a requirement, a neighboring environment, etc. A feature may have a different information form from a source image/video, and accordingly, a feature compression method and expression format may also be different from a video source.

VCM may be applied to various application fields. For example, in a surveillance system that recognizes and tracks objects or persons, VCM may be used to store or transmit object recognition information. In addition, in an intelligent transportation or smart traffic system, VCM may be used to transmit vehicle location information collected from GPS, sensing information collected from LIDAR, radar, etc. and various vehicle control information to other vehicles or infrastructure. In addition, in a smart city field, VCM may be used to perform the individual task of an interconnected sensor node or device.

The present disclosure provides various embodiments regarding feature/feature map coding. Unless otherwise specifically stated, embodiments of the present disclosure may be implemented individually or may be implemented in combination of at least two.

## Overview of VCM System

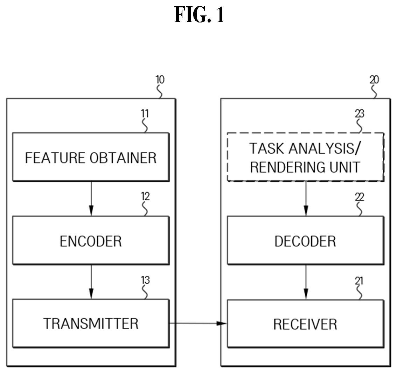

FIG. 1 is a diagram schematically showing a VCM system to which embodiments of the present disclosure may be applied.

Referring to FIG. 1, a VCM system may include an encoding apparatus 10 and a decoding apparatus 20.

An encoding apparatus 10 may compress/encode a feature/a feature map extracted from a source image/video to generate a bitstream, and transmit a generated bitstream to a decoding apparatus 20 through a storage medium or a network. An encoding apparatus 10 may also be referred to as a feature encoding apparatus. In a VCM system, a feature/a feature map may be generated in each hidden layer of a neural network. The size and number of channels of a generated feature map may vary depending on the type of a neural network or the location of a hidden layer. In the present disclosure, a feature map may be referred to as a feature set.

An encoding apparatus 10 may include a feature obtainer 9, an encoder 10 and a transmitter 13.

A feature obtainer 9 may obtain a feature/a feature map for a source image/video. According to an embodiment, a feature obtainer 9 may obtain a feature/a feature map from an external device, e.g., a feature extraction network. In this case, a feature obtainer 9 performs a feature reception interface function. Alternatively, a feature obtainer 9 may obtain a feature/a feature map by executing a neural network (e.g., CNN, DNN, etc.) by using a source image/video as an input. In this case, a feature obtainer 9 performs a feature extraction network function.

According to an embodiment, an encoding apparatus 10 may further include a source image generator (not shown) for obtaining a source image/video. A source image generator may be implemented by using an image sensor, a camera module, etc., and may obtain a source image/video through a process of capturing, synthesizing or generating an image/a video. In this case, a generated source image/video may be transmitted to a feature extraction network and used as input data for extracting a feature/a feature map.

An encoder 10 may encode a feature/a feature map obtained by a feature obtainer 9. An encoder 10 may perform a series of procedures such as prediction, transform, quantization, etc. to increase encoding efficiency. Encoded data (encoded feature/feature map information) may be output in the form of a bitstream. A bitstream including encoded feature/feature map information may be referred to as a VCM bitstream.

The transmitter 13 may transmit feature/feature map information or data output in the form of a bitstream to the decoding apparatus 20 through a digital storage medium or a network in the form of a file or streaming. Here, the digital storage medium may include various storage medium such as USB, SD, CD, DVD, Blu-ray, HDD, SSD, etc. The transmitter 13 may include elements for generating a media file with a predetermined file format, or elements for transmitting data through a broadcasting/communication network.

A decoding apparatus 20 may obtain feature/feature map information from an encoding apparatus 10 and reconstruct a feature/a feature map based on obtained information.

A decoding apparatus 20 may include a receiver 21 and a decoder 22.

A receiver 21 may receive a bitstream from an encoding apparatus 10 and obtain feature/feature map information from a received bitstream to transmit it to a decoder 22.

A decoder 22 may decode a feature/a feature map based on obtained feature/feature map information. A decoder 22 may perform a series of procedures such as dequantization, inverse transform, prediction, etc. corresponding to the operation of an encoder 14 to increase decoding efficiency.

According to an embodiment, a decoding apparatus 20 may further include a task analysis/rendering unit 23.

A task analysis/rendering unit 23 may perform task analysis based on a decoded feature/feature map. In addition, a task analysis/rendering unit 23 may render a decoded feature/feature map into a form suitable for performing a task. Based on a task analysis result and a rendered feature/feature map, various machine(-oriented) tasks may be performed.

Accordingly, a VCM system may encode/decode a feature extracted from a source image/video according to a user and/or machine request, a task purpose and a neighboring environment, and perform various machine(-oriented) tasks based on a decoded feature. A VCM system may also be implemented by extending/redesigning a video/image coding system, and may perform various encoding/decoding methods defined in the VCM standard.

## VCM Pipeline

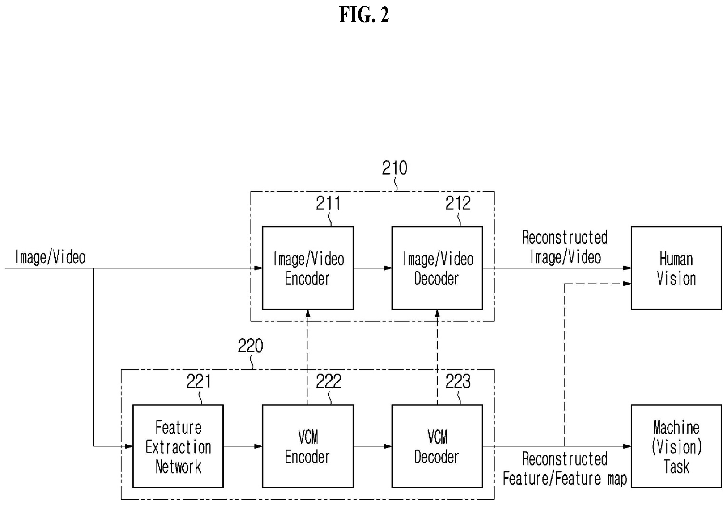

FIG. 2 is a diagram schematically showing a VCM pipeline structure to which embodiments of the present disclosure may be applied.

Referring to FIG. 2, a VCM pipeline 200 may include a first pipeline 210 for encoding/decoding an image/a video and a second pipeline 220 for encoding/decoding a feature/a feature map. In the present disclosure, a first pipeline 210 may be referred to as a video codec pipeline, and a second pipeline 220 may be referred to as a feature codec pipeline.

A first pipeline 210 may include a first stage 211 for encoding an input image/video and a second stage 212 for decoding an encoded image/video to generate a reconstructed image/video. A reconstructed image/video may be used for human viewing, i.e., human vision.

A second pipeline 220 may include a third stage 221 for extracting a feature/a feature map from an input image/video, a fourth stage 222 for encoding an extracted feature/feature map and a fifth stage 223 for decoding an encoded feature/feature map to generate a reconstructed feature/feature map. A reconstructed feature/feature map may be used for a machine (vision) task. Here, a machine (vision) task may refer to a task in which an image/a video is consumed by a machine. A machine (vision) task may be applied to a service scenario such as, for example, surveillance, intelligent transportation, smart city, intelligent industry, intelligent content, etc. According to an embodiment, a reconstructed feature/feature map may also be used for human vision.

According to an embodiment, a feature/a feature map encoded in a fourth stage 222 may be transmitted to a first stage 221 and used to encode an image/a video. In this case, an additional bitstream may be generated based on an encoded feature/feature map, and a generated additional bitstream may be transmitted to a second stage 222 and used to decode an image/a video.

According to an embodiment, a feature/a feature map decoded in a fifth stage 223 may be transmitted to a second stage 222 and used to decode an image/a video.

Although FIG. 2 shows a case in which a VCM pipeline 200 includes a first pipeline 210 and a second pipeline 220, this is just exemplary and the embodiments of the present disclosure are not limited thereto. For example, a VCM pipeline 200 may include only a second pipeline 220 or a second pipeline 220 may be extended to a plurality of feature codec pipelines.

Meanwhile, in a first pipeline 210, a first stage 211 may be performed by an image/video encoder, and a second stage 212 may be performed by an image/video decoder. In addition, in a second pipeline 220, a third stage 221 may be performed by a VCM encoder (or, a feature/feature map encoder), and a fourth stage 222 may be performed by a VCM decoder (or, a feature/feature map decoder). Hereinafter, an encoder/decoder structure is described in detail.

## Encoder

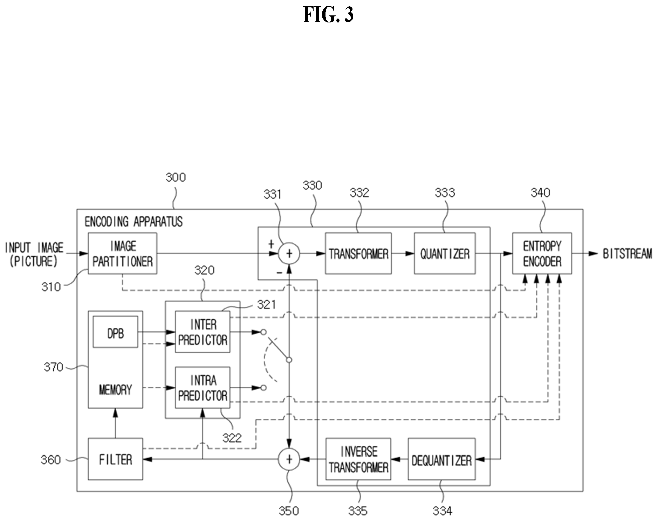

FIG. 3 is a diagram schematically showing an image/video encoder to which embodiments of the present disclosure may be applied.

Referring to FIG. 3, an image/video encoder 300 may include an image partitioner 310, a predictor 320, a residual processor 330, an entropy encoder 340, an adder 350, a filter 360 and a memory 370. A predictor 320 may include an inter predictor 321 and an intra predictor 322. A residual processor 330 may include a transformer 332, a quantizer 333, a dequantizer 334 and an inverse transformer 335. A residual processor 330 may further include a subtractor 331. An adder 350 may be referred to as a reconstructor or a reconstructed block generator. An image partitioner 310, a predictor 320, a residual processor 330, an entropy encoder 340, an adder 350 and a filter 360 described above may be configured by at least one hardware component (e.g., an encoder chipset or a processor) according to an embodiment. In addition, a memory 370 may include a decoded picture buffer (DPB) and may be configured by a digital storage medium. A hardware component described above may further include a memory 370 as an internal/external component.

An image partitioner 310 may partition an input image (or picture, frame) input to an image/video encoder 300 into at least one processing unit. As an example, a processing unit may be referred to as a coding unit (CU). A coding unit may be recursively partitioned from a coding tree unit (CTU) or a largest coding unit (LCU) according to a quad-tree binary-tree ternary-tree (QTBTTT) structure. For example, one coding unit may be partitioned into a plurality of coding units of deeper depth based on a quad-tree structure, a binary-tree structure and/or a ternary structure. In this case, for example, a quad-tree structure may be applied first and a binary tree structure and/or a ternary structure may be applied later. Alternatively, a binary tree structure may be applied first. An image/video coding procedure according to the present disclosure may be performed based on a final coding unit that is no longer partitioned. In this case, the maximum coding unit may be used as a final coding unit based on coding efficiency according to image characteristics, etc. or if necessary, a coding unit may be recursively partitioned into coding units of deeper depth and a coding unit of an optimal size may be used as a final coding unit. Here, a coding procedure may include a procedure such as prediction, transform, reconstruction, etc. described later. As another example, a processing unit may further include a prediction unit (PU) or a transform unit (TU). In this case, a prediction unit and a transform unit may be divided or partitioned from a final coding unit described above, respectively. A prediction unit may be a unit of sample prediction, and a transform unit may be a unit for deriving a transform coefficient and/or a unit for deriving a residual signal from a transform coefficient.

A unit may be used interchangeably with a term such as a block, an area, etc. in some cases. In general, a MxN block may represent a set of transform coefficients or samples consisting of M columns and N rows. A sample may generally represent a pixel or a pixel value, or may represent only the pixel/pixel value of a luma component, or may represent only the pixel/pixel value of a chroma component. A sample may be used as a term corresponding to a pixel or a pel.

An image/video encoder 300 may generate a residual signal (a residual block, a residual sample array) by subtracting a prediction signal (a predicted block, a prediction sample array) output from an inter predictor 321 or an intra predictor 322 from an input image signal (an original block, an original sample array), and a generated residual signal is

transmitted to a transformer 332. In this case, as shown, a unit that subtracts a prediction signal (a prediction block, a prediction sample array) from an input image signal (an original block, an original sample array) within an image/video encoder 300 may be referred to as a subtractor 331. A predictor may perform prediction on a block to be processed (hereinafter, referred to as a current block) and generate a predicted block including prediction samples for a current block. A predictor may determine whether intra prediction or inter prediction is applied in a unit of a current block or a CU. A predictor may generate various information related to prediction such as prediction mode information, etc. and transmit it to an entropy encoder 340. Prediction-related information may be encoded by an entropy encoder 340 and may be output in the form of a bitstream.

An intra predictor 322 may predict a current block by referring to samples within a current picture. In this case, referenced samples may be located in the neighboring area of a current block or may be located farther away according to a prediction mode. In intra prediction, prediction modes may include a plurality of non-directional modes and a plurality of directional modes. A non-directional mode may include, for example, a DC mode and a planar mode. A directional mode may include, for example, 33 directional prediction modes or 65 directional prediction modes according to the granularity of a prediction direction. However, this is an example, and a greater or fewer number of directional prediction modes may be used according to a configuration. An intra predictor 322 may also determine a prediction mode applied to a current block by using a prediction mode applied to a neighboring block.

An inter predictor 321 may derive a predicted block for a current block based on a reference block (a reference sample array) specified by a motion vector on a reference picture. In this case, in order to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on an inter prediction direction (L0 prediction, L1 prediction, Bi prediction, etc.). In inter prediction, neighboring block may include spatial neighboring block present within the current picture and temporal neighboring block present in the reference picture. A reference picture including a reference block and a reference picture including a temporal neighboring block may be the same or different. A temporal neighboring block may be referred to as a collocated reference block or a collocated CU (colCU), and a reference picture including a temporal neighboring block may be referred to as a collocated picture (colPic). For example, an inter predictor 321 may construct a motion information candidate list based on neighboring blocks and generate information indicating which candidate is used to derive the motion vector and/or reference picture index of a current block. Inter prediction may be performed based on various prediction modes, and for example, in a skip mode and a merge mode, an inter predictor 321 may use the motion information of a neighboring block as the motion information of a current block. In a skip mode, unlike a merge mode, a residual signal may not be transmitted. In a motion vector prediction (MVP) mode, the motion vector of a neighboring block may be used as a motion vector predictor, and the motion vector of a current block may be indicated by signaling a motion vector difference.

A predictor 320 may generate a prediction signal based on various prediction methods. For example, a predictor may apply intra prediction or inter prediction for prediction for one block, and may also apply both intra prediction and inter prediction simultaneously. It may be referred to as combined inter and intra prediction (CIIP). In addition, a predictor may be based on an intra block copy (IBC) prediction mode or a palette mode for prediction for a block. An IBC prediction mode or a palette mode may be used for content image/video coding, for example, such as screen content coding (SCC), etc. IBC basically performs prediction within the current picture, but since it derives a reference block within the current picture, it may operate similarly to inter prediction. In other words, IBC may use at least one of the inter prediction methods described in the present disclosure. A palette mode may be considered as an example of intra coding or intra prediction. When a palette mode is applied, a sample value within a picture may be signaled based on information related to a palette table and a palette index.

A prediction signal generated by a predictor 320 may be used to generate a reconstructed signal or to generate a residual signal. A transformer 332 may generate transform coefficients by applying a transform method to a residual signal. For example, a transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. In addition, a transform process may be applied to a pixel block of the same square size or to a non-square variable-sized block.

A quantizer 333 may quantize transform coefficients and transmit them to an entropy encoder 340, and an entropy encoder 340 may encode a quantized signal (information on quantized transform coefficients) and output it as a bitstream. Information on quantized transform coefficients may be referred to as residual information. A quantizer 333 may reorder block-shaped quantized transform coefficients in the form of a one-dimensional vector based on a coefficient scan order, and may generate information on quantized transform coefficients based on quantized transform coefficients in the form of a one-dimensional vector. An entropy encoder 340 may perform various encoding methods such as exponential Golomb, context-adaptive variable length coding (CAVLC), context-adaptive binary arithmetic coding (CABAC), etc. An

entropy encoder 340 may encode not only quantized transform coefficients but also information necessary for video/image reconstruction (e.g., the value of syntax elements, etc.) together or separately. Encoded information (E.G., encoded video/image information) may be transmitted or stored in the form of a bitstream in a network abstraction layer (NAL) unit. Image/video information may further include information on various parameter sets such as an adaptation parameter set (APS), a picture parameter set (PPS), a sequence parameter set (SPS) or a video parameter set (VPS), etc. In addition, video/image information may further include general constraint information. In addition, image/video information may further include a method for generating and using encoded information, a purpose thereof, etc. In the present disclosure, information and/or syntax elements transmitted/signaled from an image/video encoder to an image/video decoder may be included in image/video information. Image/video information may be encoded through an encoding procedure described above and included in a bitstream. A bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting and/or a storage unit (not shown) for storing a signal output from an entropy encoder 340 may be constructed as an internal/external element of an image/video encoder 300 or a transmitter may be included in an entropy encoder 340.

The quantized transform coefficients output from a quantizer 333 may be used to generate a prediction signal. For example, a residual signal (a residual block or residual samples) may be reconstructed by applying dequantization and inverse transform to quantized transform coefficients through a dequantizer 334 and an inverse transformer 335. An adder 350 may generate a reconstructed signal (a reconstructed picture, a reconstructed block, a reconstructed sample array) by adding a reconstructed residual signal to a prediction signal output from an inter predictor 321 or an intra predictor 322. When there is no residual for a processing target block, such as when a skip mode is applied, a predicted block may be used as a reconstructed block. An adder 350 may be referred to as a reconstructor or a reconstructed block generator. A generated reconstructed signal may be used for intra prediction of the next processing target block within a current picture and, as described later, may also be used for inter prediction of the next picture through filtering.

Meanwhile, luma mapping with chroma scaling may be applied in a picture encoding and/or reconstruction process.

A filter 360 may apply filtering to a reconstructed signal to enhance subjective/objective image quality. For example, a filter 360 may apply various filtering methods to a reconstructed picture to generate a modified reconstructed picture, and may store a modified reconstructed picture in a memory 370, specifically in the DPB of a memory 370. Various filtering methods may include, for example, deblocking filtering, a sample adaptive offset, an adaptive loop filter, a bilateral filter, etc. A filter 360 may generate various filtering-related information and transmit it to an entropy encoder 340. The filtering-related information may be encoded by an entropy encoder 340 and output in the form of a bitstream.

A modified reconstructed picture transmitted to a memory 370 may be used as a reference picture in an inter predictor 321. Through this, it may avoid prediction mismatch on an encoder side and a decoder side and may improve encoding efficiency.

The DPB of a memory 370 may store a modified reconstructed picture for use as a reference picture in an inter predictor 321. A memory 370 may store the motion information of a block where motion information within a current picture is derived (or, encoded) and/or the motion information of blocks within an already reconstructed picture. The stored motion information may be transmitted to an inter predictor 321 for use as motion information of a spatial neighboring block or a temporal neighboring block. A memory 370 may store the reconstructed samples of reconstructed blocks in a current picture and transmit stored reconstructed samples to an intra predictor 322.

Meanwhile, a VCM encoder (or a feature/feature map encoder) may have a structure identical/similar to an image/video encoder 300 basically described by referring to FIG. 3 in that it performs a series of procedures such as prediction, transform, quantization, etc. to encode a feature/a feature map. However, a VCM encoder is different from an image/video encoder 300 in that it targets a feature/a feature map for encoding, and accordingly, it may be different in the name of each unit (or, component) (e.g., an image partitioner 310, etc.) and its specific operation details from an image/video encoder 300. The specific operation details of a VCM encoder will be described in detail later.

## Decoder

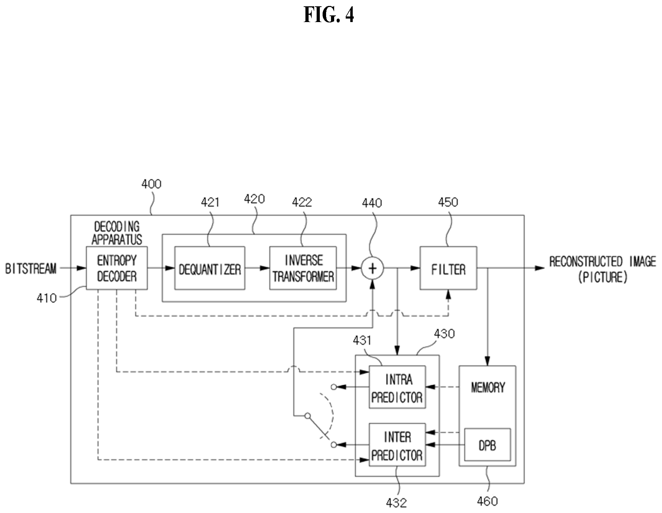

FIG. 4 is a diagram schematically showing an image/video decoder to which embodiments of the present disclosure may be applied.

Referring to FIG. 4, an image/video decoder 400 may include an entropy decoder 410, a residual processor 420, a predictor 430, an adder 440, a filter 450 and a memoery 460. A predictor 430 may include an inter predictor 431 and an intra predictor 432. A residual processor 420 may include a dequantizer 421 and an inverse transformer 422. An entropy decoder 410, a residual processor 420, a predictor 430, an adder 440 and a filter 450 described above may be configured by one hardware component (e.g., a decoder chipset or a processor) according to an embodiment. In addition, a memory 460 may include a decoded picture buffer (DPB) and may be configured by a digital storage medium. A hardware component may further include a memory 460 as an internal/external component.

When a bitstream including video/image information is input, an image/video decoder 400 may reconstruct an image/a video in response to a process in which image/video information is processed in an image/video encoder 300 of FIG. 3. For example, an image/video decoder 400 may derive units/blocks based on block partition-related information obtained from a bitstream. An image/video decoder 400 may perform decoding by using a processing unit applied in an image/video encoder. Accordingly, the processing unit of decoding may be, for example, a coding unit, and a coding unit may be partitioned according to a quad tree structure, a binary tree structure and/or a ternary tree structure from a coding tree unit or a largest coding unit. At least one transform unit may be derived from a coding unit. And, a reconstructed image signal decoded and output through an image/video decoder 400 may be played back through a playback device.

An image/video decoder 400 may receive a signal output from an encoder in FIG. 3 in the form of a bitstream, and a received signal may be decoded through an entropy decoder 410. For example, an entropy decoder 410 may parse a bitstream to derive information necessary for image reconstruction (or picture reconstruction) (e.g., video/image information). The video/image information may further include information on various parameter sets such as an adaptation parameter set (APS), a picture parameter set (PPS), a sequence parameter set (SPS), a video parameter set (VPS), etc. In addition, the video/image information may further include general constraint information. In addition, the image/video information may include the generation method, use method, purpose, etc. of decoded information. An image/video decoder 400 may decode a picture further based on information on a parameter set and/or general constraint information. The signaled/received information and/or syntax elements may be decoded through a decoding procedure and obtained from a bitstream. For example, an entropy decoder 410 may decode information in a bitstream based on a coding method such as exponential Golomb encoding, CAVLC, or CABAC, etc. and may output the values of a syntax element necessary for image reconstruction and quantized values of a transform coefficient related to a residual. More specifically, a CABAC entropy decoding method may receive a bin corresponding to each syntax element in a bitstream, determine a context model by using the information of a decoding target syntax element, the decoding information of neighboring and decoding target blocks or the information of a symbol/a bin decoded in a previous step, and predict the probability of bin occurrence according to a determined context model and perform arithmetic decoding of a bin to generate a symbol corresponding to the value of each syntax element. In this case, a CABAC entropy decoding method may update a context model by using the information of a decoded symbol/bin for the context model of the next symbol/bin after determining a context model. Among the information decoded by an entropy decoder 410, prediction-related information may be provided to a predictor (an inter predictor 432 and an intra predictor 431), and a residual value which is entropy decoded by an entropy decoder 410, i.e., quantized transform coefficients and related parameter information, may be input to a residual processor 420. A residual processor 420 may derive a residual signal (a residual block, residual samples, a residual sample array). In addition, among the information decoded by an entropy decoder 410, filtering-related information may be provided to a filter 450. Meanwhile, a receiver (not shown) that receives a signal output from an image/video encoder may be additionally constructed as an internal/external element of an image/video decoder 400 or a receiver may be a component of an entropy decoder 410. Meanwhile, an image/video decoder according to the present disclosure may also be referred to as an image/video decoding apparatus, and an image/video decoder may be divided into an information decoder (an image/video information decoder) and/or a sample decoder (an image/video sample decoder). In this case, an information decoder may include an entropy decoder 410, and a sample decoder may include at least one of a dequantizer 321, an inverse transformer 322, an adder 440, a filter 450, a memory 460, an inter predictor 432 and an intra predictor 431.

A dequantizer 421 may dequantize quantized transform coefficients and output transform coefficients. A dequantizer 421 may reorder quantized transform coefficients in the form of a two-dimensional block. In this case, reordering may be performed based on the coefficient scan order performed in an image/video encoder. A dequantizer 321 may perform dequantization on quantized transform coefficients by using a quantization parameter (i.e., quantization step size information), and may obtain transform coefficients.

An inverse transformer 422 may perform an inverse transform on transform coefficients to obtain a residual signal (a residual block, a residual sample array).

A predictor 430 may perform prediction for a current block and generate a predicted block that includes prediction samples for a current block. A predictor may determine whether intra prediction or inter prediction is applied to a current block based on prediction-related information output from an entropy decoder 410 and may determine a specific intra/inter prediction mode (prediction method).

A predictor 420 may generate a prediction signal based on various prediction methods. For example, a predictor may apply not only intra prediction or inter prediction, but also intra prediction and inter prediction at the same time for prediction for one block. This may be called combined inter and intra prediction (CIIP). In addition, a predictor may be based on an intra block copy (IBC) prediction mode or a palette mode for prediction for a block. An IBC prediction mode or a palette mode may be used for content image/video coding of game such as screen content coding (SCC), etc. IBC basically performs prediction within a current picture, but it may be performed similarly to inter prediction in that it derives a reference block within a current picture. In other words, IBC may use at least one of the inter prediction techniques described in this document. A palette mode may be considered as an example of intra coding or intra prediction. When a

palette mode is applied, information related to a palette table and a palette index may be included in image/video information and signaled.

An intra predictor 431 may predict a current block by referring to samples within a current picture. Referenced samples may be located in the neighborhood of a current block or may be located away from a current block according to a prediction mode. In intra prediction, prediction modes may include a plurality of non-directional modes and a plurality of directional modes. An intra predictor 431 may determine a prediction mode applied to a current block by using a prediction mode applied to a neighboring block.

An inter predictor 432 may derive a predicted block for a current block based on a reference block (a reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. Motion information may include a motion vector and a reference picture index. Motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, an inter predictor 432 may construct a motion information candidate list based on neighboring blocks and derive the motion vector and/or reference picture index of a current block based on received candidate selection information. Inter prediction may be performed based on various prediction modes, and prediction-related information may include information indicating an inter prediction mode for a current block.

An adder 440 may generate a reconstructed signal (a reconstructed picture, a reconstructed block, a reconstructed sample array) by adding an obtained residual signal to a prediction signal (a predicted block, a prediction sample array) output from a predictor (including an inter predictor 432 and/or an intra predictor 431). When there is no residual for a processing target block, such as when a skip mode is applied, a predicted block may be used as a reconstructed block.

An adder 440 may be referred to as a reconstructor or a reconstructed block generator. A generated reconstructed signal may be used for intra prediction of the next processing target block within a current picture, or as described later, may be output through filtering, or may be used for inter prediction of the next picture.

Meanwhile, luma mapping with chroma scaling may be applied in a picture decoding process.

A filter 450 may apply filtering to a reconstructed signal to enhance subjective/objective image quality. For example, a filter 450 may apply various filtering methods to a reconstructed picture to generate a modified reconstructed picture, and may transmit a modified reconstructed picture to a memory 460, specifically to the DPB of a memory 460. Various filtering methods may include, for example, deblocking filtering, a sample adaptive offset, an adaptive loop filter, a bilateral filter, etc.

A (modified) reconstructed picture stored in the DPB of a memory 460 may be used as a reference picture in an inter predictor 432. A memory 460 may store the motion information of a block where motion information within a current picture is derived (or decoded) and/or the motion information of blocks in an already reconstructed picture. The stored motion information may be transmitted to an inter predictor 432 to be used as motion information of a spatial neighboring block or a temporal neighboring block. A memory 460 may store the reconstructed samples of reconstructed blocks in a current picture and transmit them to an intra predictor 431.

Meanwhile, a VCM decoder (or, a feature/feature map decoder) may have a structure identical/similar to an image/video decoder 400 basically described above by referring to FIG. 4 in that it performs a series of procedures such as prediction, inverse transform, dequantization, etc. to decode a feature/a feature map. However, a VCM decoder is different from an image/video decoder 400 in that it targets a feature/a feature map for decoding, and accordingly, it may be different in the name of each unit (or, component) (e.g., DPB, etc.) and its specific operation details from an image/video decoder 400. The operation of a VCM decoder may correspond to the operation of a VCM encoder, and its specific operation details will be described in detail later.

## Feature/Feature Map Encoding Procedure

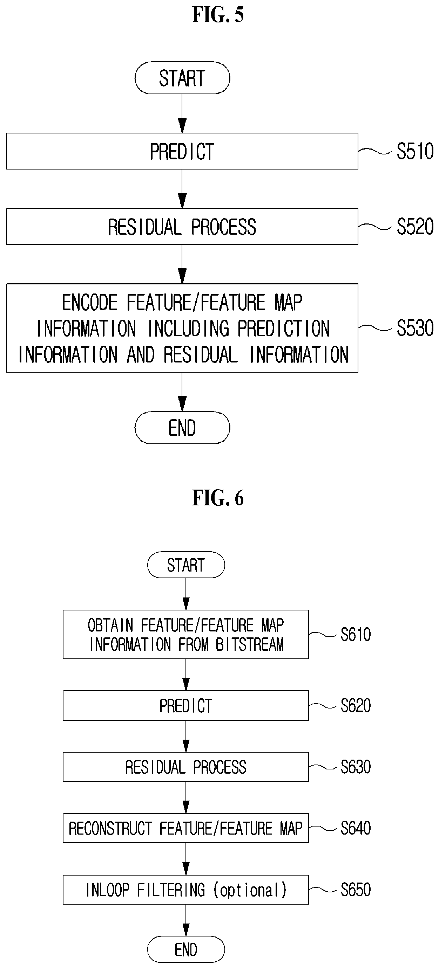

FIG. 5 is a flowchart schematically showing a feature/feature map encoding procedure to which embodiments of the present disclosure may be applied.

Referring to FIG. 5, a feature/feature map encoding procedure may include a prediction procedure S510, a residual processing procedure S520 and an information encoding procedure S530.

A prediction procedure S510 may be performed by a predictor 320 described above by referring to FIG. 3.

Specifically, an intra predictor 322 may predict a current block (i.e., a set of feature elements to be currently encoded) by referring to feature elements in a current feature/feature map. Intra prediction may be performed based on the spatial similarity of feature elements configuring a feature/a feature map. For example, feature elements included in the same region of interest (RoI) within an image/a video may be estimated to have similar data distribution characteristics. Accordingly, an intra predictor 322 may predict a current block by referring to pre-reconstructed feature elements within a region of interest including a current block. In this case, referenced feature elements may be located adjacent to a current

block or may be located apart from a current block according to a prediction mode. Intra prediction modes for feature/-feature map encoding may include a plurality of non-directional prediction modes and a plurality of directional prediction modes. The non-directional prediction modes may include, for example, prediction modes corresponding to the DC mode and planar mode of an image/video encoding procedure. In addition, directional modes may include, for example, prediction modes corresponding to 33 directional modes or 65 directional modes of an image/video encoding procedure. However, this is just an example, and the type and number of intra prediction modes may be configured/changed in various ways according to an embodiment

An inter predictor 321 may predict a current block based on a reference block (i.e., a set of referenced feature elements) specified by motion information on a reference feature/feature map. Inter prediction may be performed based on the temporal similarity of feature elements configuring a feature/a feature map. For example, temporally continuous features may have similar data distribution characteristics. Accordingly, an inter predictor 321 may predict a current block by referring to pre-reconstructed feature elements of a current feature and a temporally adjacent feature. In this case, motion information for specifying referenced feature elements may include a motion vector and a reference feature/feature map index. Motion information may further include information related to an inter prediction direction (e.g., L0 prediction, L1 prediction, Bi prediction, etc.). For inter prediction, a neighboring block may include a spatial neighboring block existing in a current feature/feature map and a temporal neighboring block existing in a reference feature/feature map. A reference feature/feature map including a reference block and a reference feature/feature map including a temporal neighboring block may be the same or different. A temporal neighboring block may be referred to as a collocated reference block, etc., and a reference feature/feature map including a temporal neighboring block may be referred to as a collocated feature/feature map. An inter predictor 321 may configure a motion information candidate list based on neighboring blocks and generate information indicating which candidate is used to derive the motion vector and/or reference feature/feature map index of a current block. Inter prediction may be performed based on various prediction modes, and for example, for a skip mode and a merge mode, an inter predictor 321 may use the motion information of a neighboring block as the motion information of a current block. For a skip mode, unlike a merge mode, a residual signal may not be transmitted. For a motion vector prediction (MVP) mode, the motion vector of a neighboring block may be used as a motion vector predictor, and the motion vector of a current block may be indicated by signaling a motion vector difference. A predictor 320 may generate a prediction signal based on various prediction methods in addition to intra prediction and inter prediction described above.

A prediction signal generated by a predictor 320 may be used to generate a residual signal (a residual block, residual feature elements) S520. A residual processing procedure S520 may be performed by a residual processor 330 described above by referring to FIG. 3. And, (quantized) transform coefficients may be generated through a transform and/or quantization procedure for a residual signal, and an entropy encoder 340 may encode information related to (quantized) transform coefficients as residual information in a bitstream S530. In addition, an entropy encoder 340 may encode information necessary for feature/feature map reconstruction, e.g., prediction information (e.g., prediction mode information, motion information, etc.) in addition to residual information in a bitstream.

Meanwhile, a feature/feature map encoding procedure may further include a procedure for generating a reconstructed feature/feature map for a current feature/feature map and a procedure (optional) for applying in-loop filtering to a reconstructed feature/feature map as well as a procedure S530 for encoding information for feature/feature map reconstruction (e.g., prediction information, residual information, partitioning information, etc.) and outputting it in the form of a bitstream.

A VCM encoder may derive (modified) residual feature(s) from quantized transform coefficient(s) through dequantization and inverse transform, and may generate a reconstructed feature/feature map based on prediction feature(s) and (modified) residual feature(s) which are the output of S510. A reconstructed feature/feature map generated in this way may be the same as a reconstructed feature/feature map generated by a VCM decoder. When an in-loop filtering procedure is performed on a reconstructed feature/feature map, a modified reconstructed feature/feature map may be generated through an in-loop filtering procedure on a reconstructed feature/feature map. A modified reconstructed feature/feature map may be stored in a decoded feature buffer (DFB) or a memory and then, used as a reference feature/feature map in the prediction procedure of a feature/feature map. In addition, (in-loop) filtering-related information (parameter) may be encoded and output in the form of a bitstream. Through an in-loop filtering procedure, noise that may occur during feature/feature map coding may be removed, and feature/feature map-based task performance may be improved. In addition, an in-loop filtering procedure may be performed both on an encoder side and a decoder side to guarantee the identity of prediction result, improve the reliability of feature/feature map coding and reduce the amount of data transmission for feature/feature map coding.

## Feature/Feature Map Decoding Procedure

FIG. 6 is a flowchart schematically showing a feature/feature map decoding procedure to which embodiments of the present disclosure may be applied.

Referring to FIG. 6, a feature/feature map decoding procedure may include an image/video information acquisition procedure S610, a feature/feature map reconstruction procedure S620 to S640 and an in-loop filtering procedure S650 for a reconstructed feature/feature map. A feature/feature map reconstruction procedure may be performed based on a prediction signal and a residual signal obtained through the process of inter/intra prediction S620, residual processing S630 and dequantization and inverse transform for a quantized transform coefficient described in the present disclosure. A modified reconstructed feature/feature map may be generated through an in-loop filtering procedure for a reconstructed feature/feature map, and a modified reconstructed feature/feature map may be output as a decoded feature/feature map. A decoded feature/feature map may be stored in a decoded feature buffer (DFB) or a memory and then, used as a reference feature/feature map in an inter prediction procedure when decoding a feature/a feature map. In some cases, the above-described in-loop filtering procedure may be omitted. In this case, a reconstructed feature/feature map may be output as a decoded feature/feature map as it is, and may be stored in a decoded feature buffer (DFB) or a memory and then, used as a reference feature/feature map in an inter prediction procedure when decoding a feature/a feature map.

## VCM Coding layer and structure

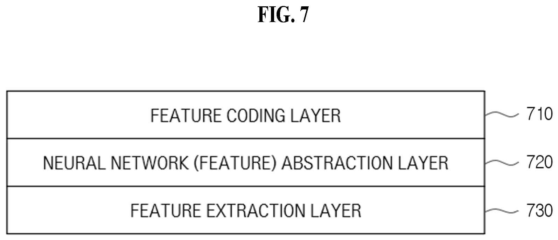

FIG. 7 is a diagram illustrating an example of a VCM layer structure.

Referring to FIG. 7, the VCM layer structure may include a feature extraction layer 1310, a neural network (feature) abstraction layer 1320, and a feature coding layer 1330.

The feature extraction layer 710 may refer to a layer for extracting a feature from an input source and may also include the result of the extraction. The feature coding layer 730 may refer to a layer for compressing the extracted feature and may also include the result of the compression.

The neural network abstraction layer 720 may abstract information generated from the feature extraction layer 710 (e.g., information on extracted feature/feature map) and transmit it to the feature coding layer 730. The neural network abstraction layer 720 may conceal the internal structure of the feature extraction layer 710 and provide a consistent feature interface function through the abstraction of the information. Accordingly, even when the compression target changes due to tool (e.g., CNN, DNN, etc.) changes, the feature coding layer 730 may perform a consistent feature coding procedure. In the present disclosure, the neural network abstraction layer (NNAL) may also be referred to as a feature abstraction layer.

An interface between the feature extraction layer 710 and the neural network abstraction layer 720, and an interface between the feature coding layer 730 and the neural network abstraction layer 720 may be predefined, and operations in the neural network abstraction layer 720 may be configured to be modifiable later.

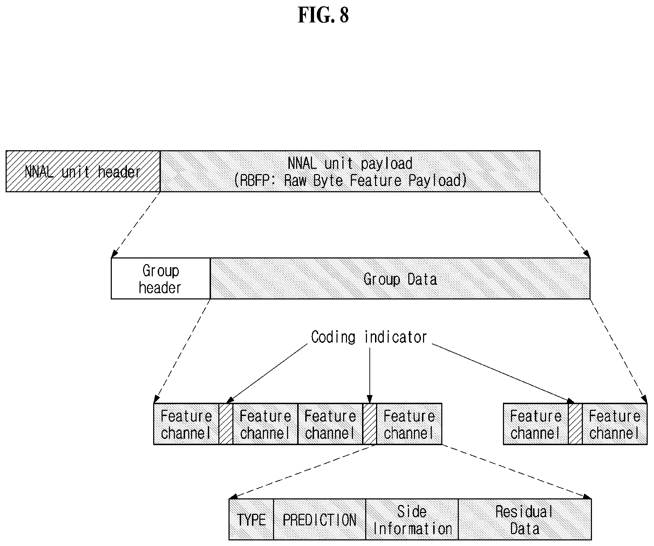

FIG. 8 is a diagram representing an example of a VCM bitstream composed of an encoded abstracted feature and NNAL information.

The bitstream configured as shown in FIG. 8 may be referred to as a neural network abstraction layer (NNAL) unit. The NNAL unit may be an independent feature reconstruction unit. Input features for a single NNAL unit may be extracted from the same layer within a neural network. Accordingly, input features for a single NNAL unit may be forced to have the same characteristics. For example, the same feature extraction method may be applied to the input features for a single NNAL unit.

An NNAL unit may include an NNAL unit header and an NNAL unit payload. The NNAL unit header may include all information necessary to utilize an encoded feature for a task. The NNAL unit payload may include abstracted feature information. The NNAL unit payload may include a group header and group data. The group header may include configuration information of feature group data, such as a temporal order, number, or common property of feature channels constituting the feature group. A feature channel may refer to a unit of an encoded feature. The group data may include a plurality of feature channels and coding indicators, and each feature channel may include type information, prediction information, side information, and residual information. In this case, the type information may indicate an encoding method, and the prediction information may indicate a prediction method. Additionally, the side information may indicate additional information required for decoding (e.g., entropy coding, quantization related information, etc.), and the residual information may include information on encoded feature elements (i.e., a set of feature value information).

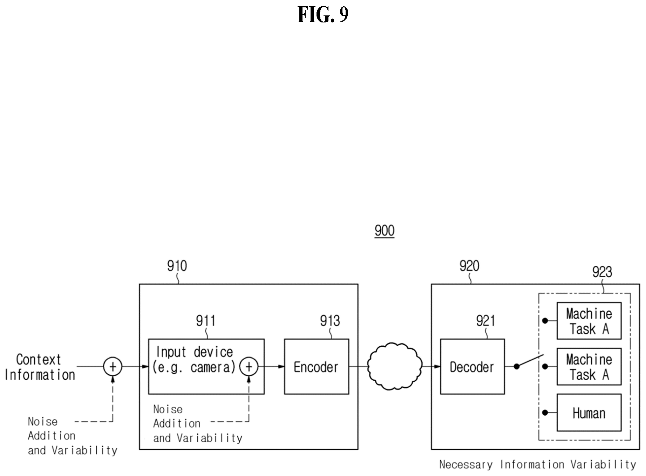

FIG. 9 is a diagram for describing various issues in a VCM system.

Referring to FIG. 9, the VCM system 900 may include the first apparatus 910 and the second apparatus 920. The first apparatus 910 is an apparatus on a transmitting side, and may include the source apparatus 911 and the encoder 913. The source apparatus 911 may obtain image information through a process such as image capture, synthesis, etc. The encoder 913 may encode image information obtained by the source apparatus 911 to generate encoded image data (encoded image/feature information) and output it in the form of a bitstream. The second apparatus 920 is an apparatus on a receiving side, and may include the decoder 921 and the task network 923. The decoder 921 may decode data obtained from the first apparatus 910 according to a requirement on a receiving side (e.g., a bandwidth, a frame rate) to obtain image/feature information. The task network 923 may use obtained image/feature information to perform a predetermined task (e.g., a machine task, a human vision task).

Predetermined context information may be input to the source apparatus 911. Here, context information is information related to a circumstance when obtaining image information, and may include information related to an apparatus environment (e.g., a location, time) or a task property, etc. Unnecessary noise may be added to the context information due to environmental factors (e.g., weather, lighting, background). In addition, unnecessary noise may also be added to image information obtained based on the context information due to the property of the source apparatus 911 (e.g., a camera parameter, sensor noise). Accordingly, a preprocessing (or, optimization) process is required to remove the above-described noise.

Meanwhile, information required for task performance may vary depending on a task property or purpose. For example, the property of information required by a machine task and a human vision task may be different. In addition, the property of required information may also vary depending on a machine task type. Accordingly, an adaptive decoding process or post-processing process that considers a task property and purpose is necessary.

Accordingly, the present disclosure is to provide various embodiments regarding an optimization technique for addressing the above-described issues and an expression method thereof. Embodiments of the present disclosure may be implemented individually or in combination of two or more. Hereinafter, embodiments of the present disclosure will be described in detail by referring to attached drawings.

## Embodiment 1

Embodiment 1 of the present disclosure relates to a method for removing the noise of an input source and a method for improving information to be suitable for a task for a specific purpose.

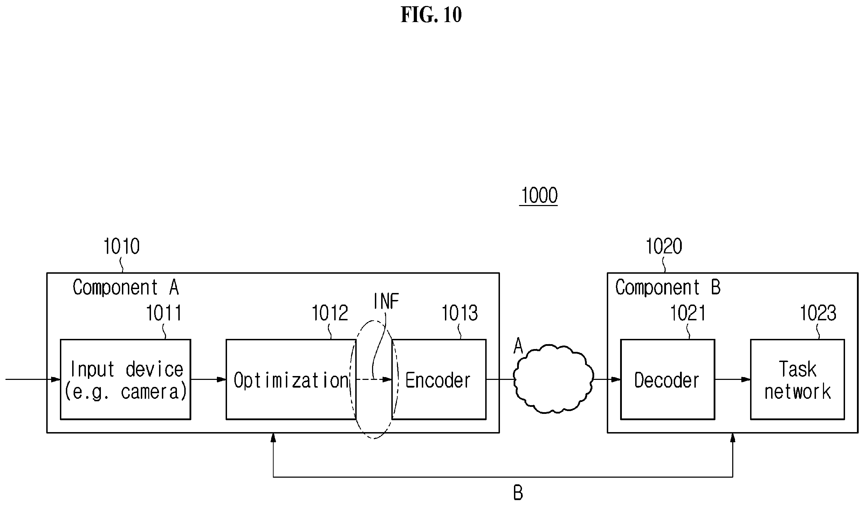

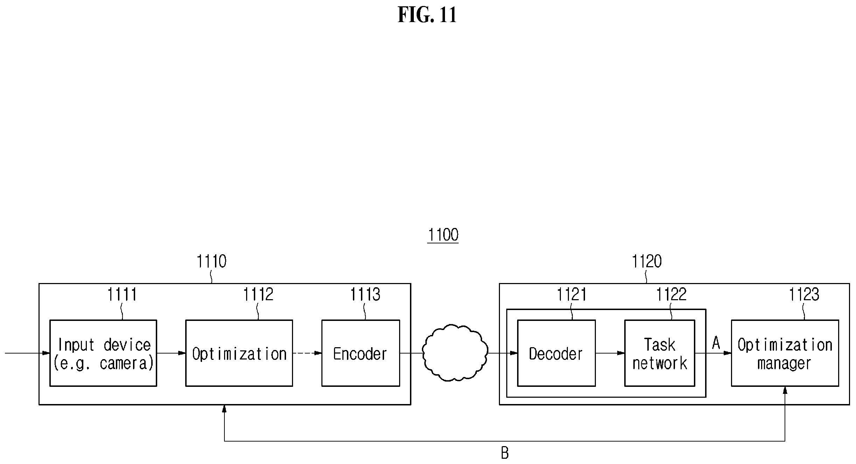

FIGS. 10 and 11 are diagrams representing a VCM system according to an embodiment of the present disclosure.

First, referring to FIG. 10, the VCM system 1000 may include the first apparatus 1010 and the second apparatus 1020. The first apparatus 1010 is an apparatus on a transmitting side, which may refer to a component that provides information (e.g., encoding and transmitting image information), and the second apparatus 1020 is an apparatus on a receiving side, which may refer to a component that consumes information (e.g., decoding and utilizing image information).

The first apparatus 1010 may include the source apparatus 1011 and the encoder 1013. In addition, the first apparatus 1010 may further include the optimizer 1012 for removing the noise of image information (or, an input source) obtained by the source apparatus 1011. In the present disclosure, the optimizer 1012 may be referred to as various terms such as a preprocessor, a noise remover, etc.

The optimizer 1012 may perform a predetermined preprocessing operation (or optimization) on image information to remove various noises added to the image information. In addition, the optimizer 1012 may improve information required for task performance through the preprocessing operation. The preprocessing method, i.e., the optimization method, needs to be adaptively defined by considering a task purpose to improve task efficiency and accuracy. To this end, the second apparatus 1020 may request (B) the first apparatus 1010 to apply an appropriate optimization method, and the first apparatus 1010 may transmit (A) information related to an optimization method (e.g., whether an optimization method is applied, an optimization type and purpose, etc.) (hereinafter, optimization information) to the second apparatus 1020. In an example, the optimization information may be transmitted to the second apparatus 1020 through a bitstream. As described above by referring to FIG. 10, a bitstream may be configured in a unit for transmission (e.g., an NNAL unit), and property information in the transmission unit (e.g., an NNAL unit type) may be utilized to transmit the optimization information.

Meanwhile, optimization information may be generated by the optimizer 1012 and transmitted to the encoder 1013. To this end, an interface (INF) between the optimizer 1012 and the encoder 1013 may be defined. An interface (INF) may consist of general information for an input source and optimization information. Here, the general information of an input source is information necessary for the basic operation of the encoder 1013, and may include, for example, an input bit depth (InputBitDepth), a luma to chroma sample ratio (InputFormat), a frame rate (FrameRete), the input source width (SourceWidth) and height (SourceHeight).

According to an embodiment, the first apparatus 1010 described above may be expanded into a plurality of apparatus, unlike illustrated in FIG. 10. In other words, the second apparatus 1020 may communicate with a plurality of first apparatuses. In this case, the plurality of first apparatuses may be interconnected to form a single logical entity. For example, the plurality of first apparatuses may be a set of CCTVs installed in a wide area, and the second apparatus 1020 may be a central control apparatus that receives a CCTV image from the plurality of first apparatuses.

As the first apparatus 1010 is expanded into a plurality of apparatuses, the number of decoders and task networks included in the second apparatus 1020 may also be expanded into a plurality of decoders and task networks. In other words, the second apparatus 1020 may also be a single logical entity in which a plurality of second apparatuses are interconnected. In this case, as illustrated in FIG. 11, the second apparatus 1120 may further include the optimization manager 1123 that controls the decoder 1121 and the task network 1122 and manages optimization information. The

optimization manager 1123 may receive a plurality of output signals from the decoder 1121 and the task network 1122 (A), request optimization information corresponding to each signal from the first apparatus 1110 and transmit a requirement on a receiving side (B). Information transmitted between the first apparatus 1110 and the second apparatus 1120 may be the same as all or a part of (B) in case of FIG. 10.

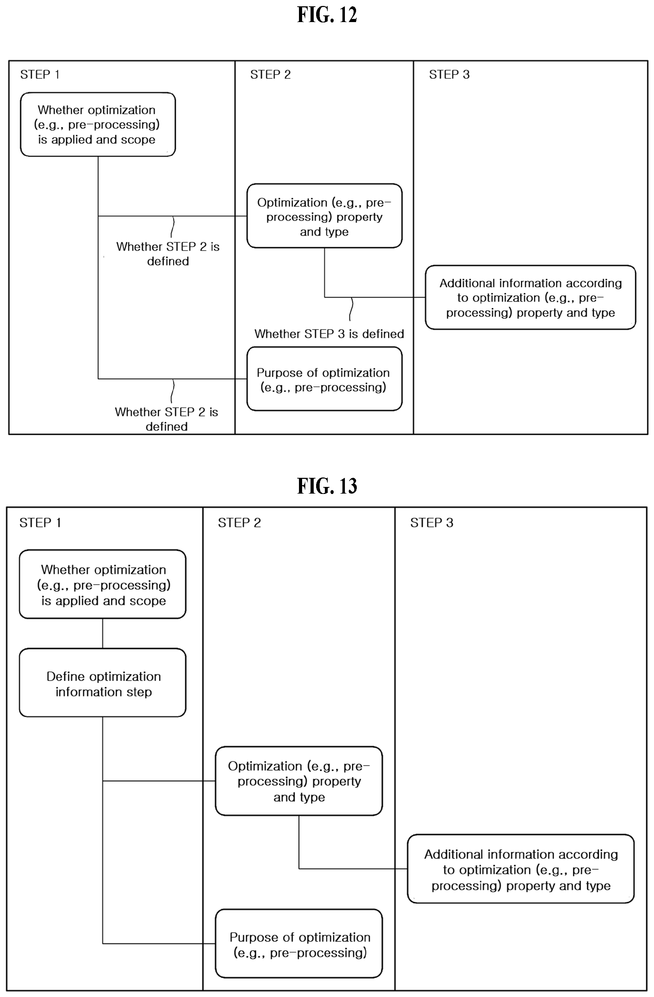

Meanwhile, optimization information is information required for a preprocessing (or, optimization) operation on an input source, and may be defined step-by-step (or, hierarchically) as illustrated in FIGS. 12 and 13.

First, referring to FIG. 12, whether optimization is applied to an input source and the scope of application may be defined in the first-level interface. An optimization property and type or an optimization purpose may be defined in the next second-level interface. Additional information according to an optimization property and type may be defined in the final third-level interface. According to an embodiment, only some of the steps may be defined or all of the steps may be defined. For example, only the first-level interface may be defined, the first and second-level interfaces may be defined or all of the first to third-level interfaces may be defined.

Table 1 below represents an example in which only the first-level interface is defined.

[Table 1]

| optimization_info(payloadSize ) { | **Descriptor** |
|---|---|
| ... | |
| **optimization_enable_flag** | u(1) |
| if(optimization_enable_flag){ | |
| **level_2_infomation_enable_flag** | |
| if(level_2_infomarion_enable_flag){ | |
| **level_2_infomation** | |
| } | |
| } | |
| } | |

Referring to Table 1, optimization_info() may include syntax elements optimization_enable_flag, level_2_information_enable_flag and level_2_information.

A syntax element optimization_enable_flag may represent whether optimization is applied to an input source. For example, optimization _enable_flag of the first value (e.g., 1) may represent that optimization is applied to an input source. On the contrary, optimization _enable_flag of the second value (e.g., 0) may represent that optimization is not applied to an input source. When optimization_enable_flag does not exist, optimization may be considered not applied to an input source and the value of optimization _enable_flag may be inferred as the second value (e.g., 0). Whether an encoded bitstream relates to an original input source or an optimized input source may be confirmed through an optimization_enable_flag value. Meanwhile, unlike Table 1, whether optimization is applied may also be indicated by using two syntax elements. For example, when whether optimization is available is indicated through an optimization enabling flag (e.g., optimization_enable_flag) and optimization is available (e.g., optimization _enable_flag = 1), whether optimization is applied to an input source may be indicated through an optimization flag (e.g., optimization_flag).

Syntax elements level_2_infomation_enable_flag and level_2_information may represent whether the second-level interface is defined and corresponding information, respectively. In an example, the second-level interface information may include information identifying an optimization property and purpose.

Table 2 below represents an example in which the first and second-level interfaces are defined.

[Table 2]

| optimization_info(payloadSize ) { | Descriptor |
|---|---|
| ... | |
| **optimization_enable_flag** | u(1) |
| if(optimization_enable_flag){ | |
| **optimization_type_flag** | u(1) |
| **optimization_purpose_flag** | u(1) |
| if(optimization_type_flag){ | |
| **optimization_type** | |
| level_3_**infomation_enable_flag** | |
| if(level_3_infomation_enable_flag){ | |
| **level_3_infomation** | |
| } | |
| } | |
| if(optimization_purpose_flag){ | |
| **optimization_purpose** | |
| } | |
| | |
| } | |

Referring to Table 2, optimization_info() may include syntax elements optimization_enable_flag, optimization_type_flag, optimization_type, optimization_purpose_flag and optimization_purpose.

A syntax element optimization _enable_flag is the first-level interface information, which is the same as described above by referring to Table 1.

A syntax element optimization_type_flag may represent whether optimization_type is defined. For example, optimization_type_flag of the first value (e.g., 1) may represent that optimization _type is defined. On the contrary, optimization_type_flag of the second value (e.g., 0) may represent that optimization _type is not defined.

A syntax element optimization _type may be defined when optimization_type_flag is the first value (e.g., 1). optimization _type may represent an optimization property applied to an input source. The optimization property may be represented by the type of noise added to an input source and a method for removing/reducing it, the type of information to be improved and a method for improving it, etc.

A syntax element optimization_purpose_flag may represent whether optimization_purpose is defined. For example, optimization_purpose_flag of the first value (e.g., 1) may represent that optimization_purpose is defined. On the contrary, optimization_purpose_flag of the second value (e.g., 0) may represent that optimization_purpose is not defined.

A syntax element optimization_purpose may be defined when optimization_purpose_flag is the first value (e.g., 1). optimization_purpose may represent a task type that may be performed, i.e., a target application.

Meanwhile, a requirement on a receiving side may be different according to the performance and operating environment of a device. As a result, even when a purpose is the same, an applied optimization property may also be different, and an optimization property may not accurately represent an application that may be performed. Accordingly, it is necessary to define both an optimization property (optimization_type) and an optimization purpose (optimization_purpose) as the second-level interface information. Through this second-level interface information, a user may select and request a bitstream suitable for the performance and operating environment of a device.

A specific example for expressing an optimization property (optimization _type) is the same as in Tables 3 and 4 below.

First, Table 3 relates to a case in which various optimization methods are applied.

[Table 3]

| Value | Interpretation |
|---|---|
| optimization_type = = 0 | May be used as determined by the application |
| optimization_type> 0 && ( optimization_type& 0x01 ) = = 0 | No temporal resampling |
| ( optimization_type& 0x01 ) != 0 | With temporal resampling |
| optimization_type> 0 && ( optimization_type& 0x02 ) = = 0 | No spatial resampling |
| ( optimization_type& 0x02 ) != 0 | With spatial resampling |
| optimization_type> 0 && ( optimization_type& 0x04 ) = = 0 | No ROI-based optimization |
| ( optimization_type& 0x04 ) != 0 | ROI-based optimization |
| optimization_type> 0 && ( optimization_type& 0x08 ) = = 0 | No quality optimization |
| ( optimization_type& 0x08 ) != 0 | With quality optimization; the pictures have been pre-processed to reduce unnecessary information or improve the quality of necessary information.(e.g to reduce the amount of noise and remove speckles at the picture-level) |

Referring to Table 3, when 'optimization_type == 0' is True, an optimization method determined by an application may be used as is. When 'optimization_type > 0 && ( optimization_type & 0x01 ) == 0' is True, temporal resampling may not be used as an optimization method. When '( optimization _type & 0x01) != 0' is True, temporal resampling may be used as an optimization method. When 'optimization_type > 0 && ( optimization _type & 0x02 ) == 0' is True, spatial resampling may not be used as an optimization method. When '( optimization _type & 0x02 ) != 0' is True, spatial resampling may be used as an optimization method. When 'optimization_type > 0 && ( optimization_type & 0x04 ) == 0' is True, a region of interest(ROI)-based optimization method may not be used. When '( optimization_type & 0x04 ) != 0' is True, an ROI-based optimization method may be used. When 'optimization _type > 0 && ( optimization_type & 0x08 ) == 0' is True, spatial quality optimization may not be used. When '( optimization _type & 0x08 ) != 0' is True, quality optimization may be used. When quality optimization is used, a picture may be preprocessed to reduce unnecessary information or improve the quality of necessary information (e.g., reduce noise and remove speckles).

Table 4 relates to a case in which only one optimization method is applied.

[Table 4]

| Value | Interpretation |
|---|---|
| 000 | With temporal resampling |
| 001 | With spatial resampling |
| 010 | ROI-based optimization |
| 011 | With quality optimization; the pictures have been pre-processed to reduce unnecessary information or improve the quality of necessary information.(e.g to reduce the amount of noise and remove speckles at the picture-level) |

Referring to Table 4, when an optimization_type value is ’000’, temporal resampling may be used as an optimization method. When an optimization_type value is ’001’, spatial resampling may be used as an optimization method. When an optimization_type value is ’010’, an ROI-based optimization method may be used. When an optimization_type value is ’011’, quality optimization may be used. When spatial quality optimization is used, a picture may be preprocessed to reduce unnecessary information or improve the quality of necessary information (e.g., reduce noise and remove speckles).

Meanwhile, the above-described optimization methods (e.g., temporal resampling, etc.) are just an example, and the embodiments of the present disclosure are not limited thereto. In other words, the number of bits of optimization_type or an expression method in Tables 3 and 4 may be expanded to express various optimization methods.

Next, a specific example for expressing an optimization purpose (optimization_purpose) is the same as in Tables 5 and 6 below.

First, Table 5 relates to a case in which various optimization methods are applied.

[Table 5]

| Value | Interpretation |
|---|---|
| optimization_purpose == 0 | May be used as determined by the application |
| optimization_purpose> 0 && ( optimization_purpose& 0x01 ) == 0 | The intended purpose of the optimization do not include object detection . |
| ( optimization_ purpose & 0x01 ) != 0 | The intended purpose of the optimization include object detection. |
| optimization_ purpose > 0 && ( optimization_ purpose & 0x02 ) == 0 | The intended purpose of the optimization do not include object tracking. |
| ( optimization_purpose& 0x02 ) != 0 | The intended purpose of the optimization include object tracking. |
| optimization_purpose> 0 && ( optimization_purpose& 0x04 ) == 0 | The intended purpose of the optimization do not include object segmentation |
| ( optimization_purpose& 0x04 ) != 0 | The intended purpose of the optimization include object segmentation |
| optimization_purpose> 0 && ( optimization_purpose& 0x08 ) == 0 | The intended purpose of the optimization do not include face recognition |
| ( optimization_purpose& 0x08 ) != 0 | The intended purpose of the optimization include face recognition |
| optimization_purpose > 0 && ( optimization_purpose & 0x10 ) == 0 | The intended purpose of the picture do not include human viewing. |
| ( optimization_purpose & 0x10 ) != 0 | The intended purposes of the picture include human viewing. |
| optimization_purpose > 0 && ( optimization_purpose & 0x20 ) == 0 | The intended purposes of the picture do not include machine analysis. |
| ( optimization_purpose & 0x20 ) != 0 | The intended purposes of the picture include machine analysis. |

Referring to Table 5, when 'optimization_purpose == 0' is True, an optimization purpose determined by an application may be applied as is. When 'optimization_purpose > 0 && ( optimization_purpose & 0x01 ) == 0' is True, object detection may not be included in an optimization purpose. When '( optimization_purpose & 0x01) != 0' is True, object detection may be included in an optimization purpose. When 'optimization_purpose > 0 && ( optimization_purpose & 0x02 ) == 0' is True, object tracking may not be included in an optimization purpose. When '( optimization_purpose & 0x02 ) != 0' is True, object tracking may be included in an optimization purpose. When 'optimization_purpose > 0 && ( optimization_purpose & 0x04 ) == 0' is True, object segmentation may not be included in an optimization purpose. When '( optimization_purpose & 0x04 ) != 0' is True, object segmentation may be included in an optimization purpose. When 'optimization_purpose > 0 && ( optimization_purpose & 0x08 ) == 0' is True, face recognition may not be included in an optimization purpose. When '( optimization_purpose & 0x08 ) != 0' is True, face recognition may be included in an optimization purpose. When 'optimization_purpose > 0 && ( optimization_purpose & 0x10 ) == 0' is True, human viewing may not be included in an optimization purpose. When '( optimization_purpose & 0x10 ) != 0' is True, human viewing may be included in an optimization purpose. When 'optimization_purpose > 0 && ( optimization_purpose & 0x20 ) == 0' is True, machine analysis may not be included in an optimization purpose. When '( optimization_purpose & 0x20) != 0' is True, machine analysis may be included in an optimization purpose.

Table 6 relates to a case in which only one optimization method is applied.

[Table 6]

| Value | Interpretation |
|---|---|
| 000 | The intended purpose of the optimization include object detection. |
| 001 | The intended purpose of the optimization include object tracking. |
| 010 | The intended purpose of the optimization include object segmentation |
| 011 | The intended purpose of the optimization include face recognition |
| 100 | The intended purposes of the picture include human viewing. |
| 101 | The intended purposes of the picture include machine analysis. |

Referring to Table 6, when an optimization_purpose value is '000', object detection may be included in an optimization purpose. When an optimization_purpose value is '001', object tracking may be included in an optimization purpose. When an optimization_purpose value is '010', object segmentation may be included in an optimization purpose. When an optimization_purpose value is '011', face recognition may be included in an optimization purpose. When an optimization_purpose value is '100', human viewing may be included in an optimization purpose. When an optimization_purpose value is '101', machine analysis may be included in an optimization purpose.

Meanwhile, the above-described optimization purposes (e.g., object detection, etc.) are just an example, and the embodiments of the present disclosure are not limited thereto. In other words, the number of bits of optimization_purpose or an expression method in Tables 5 and 6 may be expanded to express various optimization purposes.

Referring to Table 2 again which defines the first and second-level interfaces, optimization_info() may further include syntax elements level_3_information_enable_flag and level_3_information.

Syntax elements level_3_infomation_enable_flag and level_3 _information may represent whether the third-level interface is defined and corresponding information, respectively. In an example, the third-level interface information may include the detailed information of an optimization method applied to an input source.

The general information of an original input source (e.g., a frame rate, the source width/height, etc.) may be changed through optimization, and according to an application, information related to a general information change may be required. For example, when spatial resolution reduced by optimization needs to be changed to the original resolution, an encoder/a decoder must know the resolution of an original input source or a resolution reduction ratio. Alternatively, when ROI-based optimization is applied, an encoder/a decoder must know an ROI area and a non-ROI area. Accordingly, detailed information including information related to a general information change may be additionally defined as the third-level interface.

Tables 7 to 9 below represent an example in which all of the first to third-level interfaces are defined.

[Table 7]

| optimization_info(payloadSize ) { | **Descriptor** |
|---|---|
| ... | |
| **optimization_enable_flag** | u(1) |
| if(optimization_enable_flag){ | |
| **optimization_type_flag** | u(1) |
| **optimization_purpose_flag** | u(1) |
| if(optimization_type_flag){ | |
| **optimization_type** | |
| if(( optimization_type& 0x04 ) != 0){ | |
| **ROI_info_flag** | |
| if(ROI_info_flag){ | |
| **ROI_info**() | |
| } | |
| } | |
| if(( optimization_type& 0x01 ) != 0){ | |
| **temporal_optimization_info_flag** | |
| if(temporal_ optimization info_flag){ | |
| **temporal_ optimization info()** | |
| } | |
| } | |
| if(( optimization_type& 0x02 ) != 0){ | |
| **spatial_optimization_info_flag** | |
| if(spatial_ optimization info_flag){ | |
| **spatial_ optimization info**() | |
| } | |
| } | |
| if(( optimization_type& 0x08 ) != 0){ | |
| **quality_optimization_info_flag** | |
| if(quality_optimization_info_flag){ | |
| **quality_optimization_info ()** | |
| } | |
| } | |
| } | |
| if(optimization_purpose_flag){ | |
| **optimization_purpose** | |
| } | |
| | |
| } | |

[Table 8]

| optimization_info(payloadSize ) { | **Descriptor** |
|---|---|
| ... | |
| **optimization_enable_flag** | u(1) |
| if(optimization_enable_flag){ | |
| **optimization_type_flag** | u(1) |
| **optimization_purpose_flag** | u(1) |
| if(optimization_type_flag){ | |
| num_of_optimization_type | |
| for( i = 0; i < num_of_optimization_type; i++ ){ | |
| **optimization_type[i]** | |
| if( optimization_type[i] == 2){ | |
| **ROI_info_flag** | |
| if(ROI_info_flag){ | |
| **ROI_info**() | |
| } | |
| } | |
| if( optimization_type[i] == 0){ | |
| **temporal_optimization_info_flag** | |
| if(temporal_ optimization info_flag){ | |
| **temporal_ optimization info()** | |
| } | |
| } | |
| if( optimization_type[i] ==1){ | |
| **spatial_optimization_info_flag** | |
| if(spatial_ optimization info_flag){ | |
| **spatial_ optimization info**() | |
| } | |
| } | |
| if( optimization_type[i] == 3){ | |
| **quality_optimization_info_flag** | |
| if(quality_optimization_info_flag){ | |
| **quality_optimization_info ()** | |
| } | |
| } | |
| } | |
| } | |
| if(optimization_purpose_flag){ | |
| num_of_optimization_purpose | |
| for( j = 0; j< num_of_optimization_purpose; j++ ) | |
| ***optimization_purpose[j]*** | |
| } | |
| | |
| | |
| } | |

[Table 9]

| optimization_info(payloadSize ) { | **Descriptor** |
|---|---|
| ... | |
| **optimization_enable_flag** | u(1) |
| if(optimization_enable_flag){ | |
| **optimization_type_flag** | u(1) |
| **optimization_purpose_flag** | u(1) |
| if(optimization_type_flag){ | |
| **optimization_type** | |
| if( optimization_type == 0){ | |
| **ROI_info_flag** | |
| if(ROI_info_flag){ | |
| **ROI_info**() | |
| } | |
| } | |
| if( optimization_type == 1){ | |
| **temporal_optimization_info_flag** | |
| if(temporal_ optimization info_flag){ | |
| **temporal_ optimization info()** | |
| } | |
| } | |
| if( optimization_type ==2){ | |
| **spatial_optimization_info_flag** | |
| if(spatial_ optimization info_flag){ | |
| **spatial_ optimization info**() | |
| } | |
| } | |
| if( optimization_type == 3){ | |
| **quality_optimization_info_flag** | |
| if(quality_optimization_info_flag){ | |
| **quality_optimization_info ()** | |
| } | |
| } | |
| } | |
| if(optimization_purpose_flag){ | |
| **optimization_purpose** | |
| } | |
| } | |

Table 7 is an example of expressing one optimization property (optimization _type) and optimization purpose (optimization_purpose) based on Tables 3 and 5 described above, Table 8 is an example of expressing a plurality of optimization properties and optimization purposes based on Tables 4 and 6 described above and Table 9 is an example of expressing one optimization property and optimization purpose based on Tables 4 and 6 described above. In Table 8, to express a plurality of optimization properties and optimization purposes applied to an input source, a syntax element num_of_optimization _type representing the number of optimization properties and a syntax element num_of_optimization_purpose representing an optimization purpose may be additionally defined.

As described above by referring to FIG. 12 and related tables, up to which level of an interface for which optimization information will be defined may be determined individually in each step. For example, whether the second-level interface is defined (e.g., level _2_information_enable_flag) may be determined in the first-level interface, and whether the third-level interface is defined (e.g., level_3_information_enable_flag) may be determined in the second-level interface. On the contrary, up to which level of an interface for which optimization information will be defined may be determined at once in the first-level interface, which is the top level, as illustrated in FIG. 13. Table 10 represents an example of optimization_info() based on the interface structure of FIG. 13.

[Table 10]

| optimization_info(payloadSize ) { | Descriptor |
|---|---|
| ... | |
| | |
| **optimization_enable_flag** | u(1) |
| **if** (**optimization_enable_flag**){ | |
| **optimization_info_level** | u(2) |
| } | |
| if(optimization_enable_flag&& **optimization_info_level==1** ){ | |
| **optimization_type** | **u**(20) |
| **optimization_purpose** | **u**(20) |
| } | |
| else **if**(optimization_enable_flag&& optimization_info_level==2){ | |
| **optimization_type** | **u**(20) |
| **optimization_purpose** | **u**(20) |
| if(( optimization_type& 0x04 ) != 0){ | |
| **ROI_info_flag** | |
| if(ROI_info_flag){ | |
| **ROI_info()** | |
| } | |
| } | |
| if(( optimization_type& 0x01 ) != 0){ | |
| **temporal_optimization_info_flag** | |
| if(temporal_ optimization info_flag){ | |
| **temporal_ optimization info()** | |
| } | |
| } | |
| if(( optimization_type& 0x02 ) != 0){ | |
| **spatial_optimization_info_flag** | |
| **if**(spatial_ optimization info_flag){ | |
| **spatial_ optimization info()** | |
| } | |
| } | |
| if(( optimization_type& 0x08 ) != 0){ | |
| **quality_optimization_info_flag** | |
| **if**(quality_optimization_info_flag){ | |
| **quality_optimization_info ()** | |
| } | |
| } | |
| } | |
| | |
| } | |

Referring to Table 10, optimization_info() may include a syntax element optimization_info_level representing up

to which level of an interface for which optimization information will be defined. optimization_info( ) may further include corresponding level interface information according to the value of optimization_info_level. For example, when the value of optimization_info_level is 0, optimization_info( ) includes only the first-level interface information. On the contrary, when the value of optimization_info_level is 1, optimization_info( ) further includes optimization_type and optimization_purpose as the second-level interface information. On the contrary, when the value of optimization_info_level is 2, optimization_info( ) further includes the third-level interface information such as ROI_info_flag, etc. in addition to the second-level interface information described above.

Meanwhile, in Tables 7 to 10 described above, a syntax element ROI_info_flag may represent whether a syntax ROI_info( ) representing ROI-related information is defined. For example, ROI_info_flag of the first value (e.g., 1) may represent that ROI_info( ) is defined. On the contrary, ROI_info_flag of the second value (e.g., 0) may represent that ROI_info( ) is not defined. ROI_info_flag may be defined when an optimization property (optimization_type) includes ROI-based optimization. An example of an ROI_info( ) syntax structure is the same as in Table 11.

[Table 11]

| ROI_info (){ | Descriptor |
|---|---|
| num_of_ROI | |
| for( i = 0; i < num_of_ROI; i++ ){ | |
| region_info[i] | |
| ROI_processing_idc[i] | |
| } | |
| non-ROI_processing_idc | |
| } | |

Referring to Table 11, ROI_info( ) may include a syntax element num_of_ROI.

A syntax element num_of_ROI may represent the number of ROIs within an input source (e.g., a picture). Region_info representing the location and size of an ROI area may be defined as many as the number of ROIs indicated by num_of_ROI.

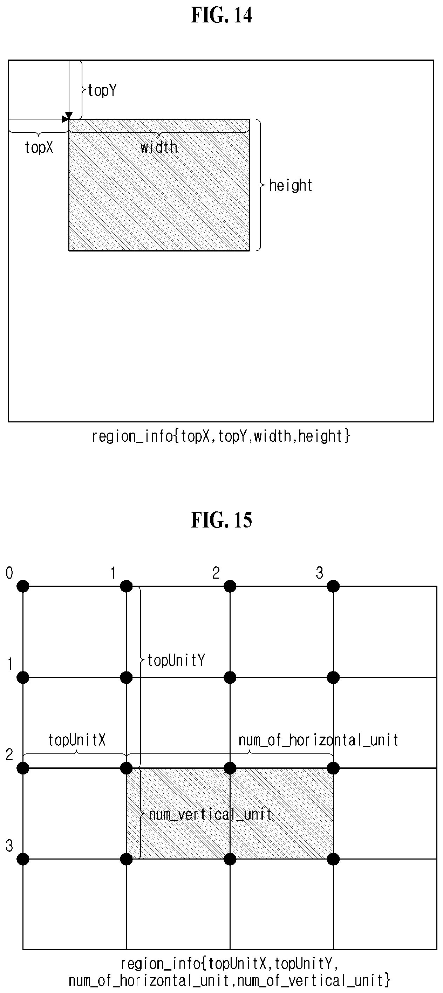

An example of expressing the location and size of an ROI area within an optimized input source in a pixel unit is the same as illustrated in FIG. 14. In FIG. 14, a variable topX represents the horizontal location of the top-left point of an ROI area (a hatched area) in a pixel unit, and a variable topY represents the vertical location of the top-left point of the ROI area in a pixel unit. In addition, a variable width represents the width of the ROI area in a pixel unit, and a variable height represents the height of the ROI area in a pixel unit. Meanwhile, unlike illustrated in FIG. 12, the location and size of an ROI area within an input source may also be expressed in a predetermined unit larger than a pixel. For this purpose, the example of an ROI_info( ) syntax structure is the same as in Table 12.

[Table 12]

| ROI_info (){ | Descriptor |
|---|---|
| num_of_ROI | |
| unit_width | |
| unit_height | |
| for( i = 0; i < num_of_ROI; i++ ){ | |
| region_info[i] | |
| ROI_processing_idc[i] | |
| } | |
| non-ROI_processing_idc | |
| } | |

Referring to Table 12, ROI_info( ) may further include syntax elements unit_width and unit_height representing the expression unit of an ROI area, unlike Table 11.

A syntax element unit_width may represent the width of a predetermined unit obtained by partitioning an input source in a specific size to express an ROI area. In addition, a syntax element unit_height may indicate the height of the predetermined unit. When a suitable partitioning unit is defined in advance considering the processing unit of an encoder and a decoder, unit_width and unit_height representing the size of the partitioning unit may not be defined.

An example of expressing the location and size of an ROI area within an optimized input source in a

predetermined partitioning unit described above is the same as illustrated in FIG. 15. In FIG. 15, a variable topUnitX represents the horizontal location of the top-left point of an ROI area (a hatched area) in a predetermined partitioning unit, and a variable topUnitY represents the vertical location of the top-left point of the ROI area in the partitioning unit. For example, topUnitX of the ROI area may be 1 and topUnitYsms may be 2. In addition, a variable num_of_horizontal_unit represents the width of the ROI area in the partitioning unit, and a variable num_of_vertical _unit represents the height of the ROI area in the partitioning unit. For example, num_of_horizontal _unit of the ROI area may be 2 and num_of_vertical_unit may be 1.

Meanwhile, ROI_info( ) may further include property information of predefined areas within an input source. An example of an ROI_info( ) syntax structure that further includes the area property information is the same as in Table 13.

[Table 13]

| ROI_info (){ | Descriptor |
|---|---|
| num_of_region | |
| for( i = 0; i < num_of_region; i++ ){ | |
| region_property[i] | |
| if(region_property[i] == 1){ | |
| region_info[i] | |
| ROI_processing_idc[i] | |
| } | |
| else | |
| non-ROI_processing_idc[i] | |
| } | |
| } | |

Referring to Table 13, ROI_info( ) may further include a syntax element region_property, unlike Tables 11 and 12.

A syntax element region_property may represent the properties of predefined areas within an input source. The properties of the predefined areas may be divided into a non-ROI or an ROI. In other words, region_property may have the first value (e.g., 0) representing a non-ROI (e.g., background) or the second value (e.g., 1) representing an ROI (e.g., foreground), as in Table 14 below.

[Table 14]

| region_property | Interpretation |
|---|---|
| 0 | Non-ROI(e.g. background) |
| 1 | ROI(e.g. foreground) |

Another example of an ROI_info( ) syntax structure that further includes the area property information is the same as in Table 15.

[Table 15]

| ROI_info (){ | Descriptor |
|---|---|
| num_of_ROI | |
| for( i = 0; i < num_of_ROI; i++ ){ | |
| region_property[i] | |
| region_info[i] | |
| ROI_processing_idc[i} | |
| } | |
| non-ROI_processing_idc | |
| } | |

Referring to Table 15, ROI_info( ) may further include a syntax element region_property, unlike Tables 11 and 12.

A syntax element region_property may represent the properties of ROI areas within an input source. The

properties of the ROI areas may be divided by importance. In other words, region_property may have one of the first value (e.g., 0) representing importance level 0 to the fourth value (e.g., 4) representing importance level 3, as in Table 16 below.

[Table 16]

| region_property | Interpretation |
|---|---|
| 0 | importance level 0 |
| 1 | importance level 1 |
| 3 | importance level 2 |
| 4 | importance level 3 |

Referring again to Tables 7 to 10 described above, optimization_info( ) may further include a syntax element temporal_optimization_info_flag.

A syntax element temporal_optimization_info_flag may represent whether temporal_optimization_info( ) including temporal resampling-related information is defined. For example, temporal_optimization_info_flag of the first value (e.g., 1) may represent that temporal_optimization_info( ) is defined. On the contrary, temporal_optimization_info_flag of the second value (e.g., 0) may represent that temporal_optimization_info( ) is not defined. temporal_optimization_info_flag may be defined only when an optimization property (optimization _type) includes temporal resampling. An example of temporal_optimization_info( ) is the same as in Table 17.

[Table 17]

| temporal_ optimization info (){ | Descriptor |
|---|---|
| original_temporal_info | |
| optimization_method_idc | |
| } | |

Referring to Table 17, temporal_optimization_info( ) may include syntax elements original_temporal_info and optimization_method_idc.

A syntax element original_temporal_info may be information necessary to reconstruct the temporal information of an optimized input source to the temporal information of an original input source or to compare the two. For example, original_temporal_info may include the frame rate and/or temporal resampling ratio of an original input source.

A syntax element optimization_method_idc may be the identification information of a temporal optimization method applied to an input source. When decoded information needs to be reconstructed to the temporal level of an original input source for a specific purpose, optimization_method_idc may be used.

Referring again to Tables 7 to 10, optimization_info( ) may further include a syntax element spatial_optimization_info_flag.

A syntax element spatial_optimization_info_flag may represent whether spatial_optimization_info( ) including spatial resampling(or, spatial resampling)-related information is defined. For example, spatial_optimization_info_flag of the first value (e.g., 1) may represent that spatial_optimization_info( ) is defined. On the contrary, spatial _optimization_info_flag of the second value (e.g., 0) may represent that spatial_optimization_info( ) is not defined. spatial_optimization_info_flag may be defined only when an optimization property (optimization_type) includes spatial resampling. An example of spatial_optimization_info( ) is the same as in Table 18.

[Table 18]

| spatial_ optimization info (){ | Descriptor |
|---|---|
| | |
| original_spatial_info | |
| optimization_method_idc | |
| } | |

Referring to Table 18, spatial_optimization_info( ) may include syntax elements original_spatial_info and optimization_method_idc.

A syntax element original_spatial_info may be information necessary to reconstruct the spatial level of an optimized input source to the spatial level of an original input source or to compare the two. For example, original_spatial_info may include the resolution and/or spatial resampling ratio of an original input source.

A syntax element optimization_method_idc may be the identification information of a spatial optimization method

applied to an input source. When decoded information needs to be reconstructed to the spatial level of an original input source for a specific purpose, optimization_method_idc may be used.

Referring again to Tables 7 to 10, optimization_info( ) may further include a syntax element quality_optimization_info_flag.

A syntax element quality_optimization_info_flag may represent whether quality_optimization_info( ) including quality optimization-related information is defined. For example, quality_optimization_info_flag of the first value (e.g., 1) may represent that quality_optimization_info( ) is defined. On the contrary, quality_optimization_info_flag of the second value (e.g., 0) may represent that quality_optimization_info( ) is not defined. quality_optimization_info_flag may be defined only when an optimization property (optimization_type) includes quality optimization. An example of quality_optimization_info( ) is the same as in Table 19.

[Table 19]

| quality_optimization_info () | Descriptor |
|---|---|
| { | |
| optimization_type | |
| optimization_method_idc | |
| | |
| } | |

Referring to Table 19, quality_optimization_info( ) may include syntax elements optimization_type and optimization_method_idc.

A syntax element optimization_type may be the property information of an applied optimization method. The purpose of optimization may be to remove noise or strengthen or weaken specific property information. In addition, an optimization method may change the semantic information of an input source. Accordingly, an information consumer may use the property information of the optimization method to determine whether a corresponding optimization method is suitable for a task purpose and its impact.

A syntax element optimization_method_idc may be the identification information of an applied optimization method. Even an optimization method with the same purpose and similar properties may be implemented and applied in different ways. For example, an optimization method may be defined differently according to the operating conditions and performance of a device to be applied. Accordingly, an information consumer may use the identification information of the optimization method to specifically confirm a tool used for a corresponding optimization method. An example of optimization_method_idc is the same as in Table 20.

[Table 20]

| optimization_method_idc | description |
|---|---|
| 00 | De-noising filter |
| 01 | Edge preserving filter |
| 10 | Image enhancement processing |
| 11 | Filter bank(array of bandpass filters) |

Referring to Table 20, when an optimization_method_idc value is '00', a de-noising filter may be used to optimize an input source. When an optimization_method_idc value is '01', an edge preserving filter may be used to optimize an input source. When an optimization_method_idc value is '10', an image enhancement process may be used to optimize an input source. When an optimization_method_idc value is '11', a filter bank (an array of bandpass filters) may be used to optimize an input source.

In order to transmit the above-described optimization information to apparatuses on a receiving side 1020 and 1120, it is necessary to include optimization information transmitted to the encoders 1013 and 1113 in a bitstream through the definition of an interface (INF) between the optimizers 1012 and 1112 and the encoders 1013 and 1113.

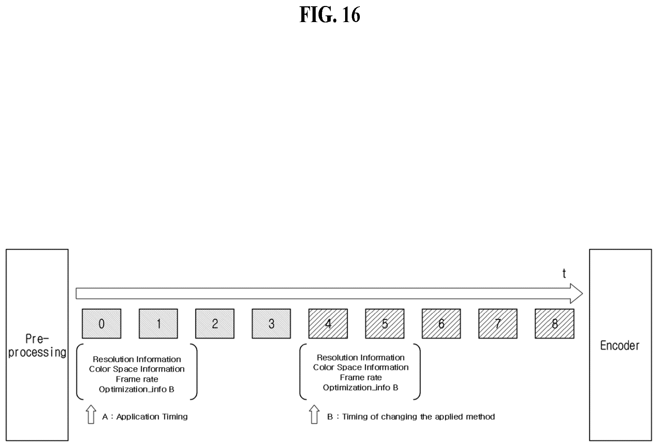

FIG. 16 is a diagram representing a process of optimizing an input source and transmitting it to an encoder. In FIG. 16, 0 to 8 refer to the frame number of an input source, which may be the same as the input/output order of each frame. In addition, time point A refers to a time point when optimization method A is applied, and time point B refers to a time point when new optimization method B is applied.

Referring to FIG. 16, at time point A, optimization method A corresponding to optimization_info_A is applied to

frame 0. In addition, the optimization method A is also applied to frames 1 to 3 subsequent to frame 0 in an input/output order. Thereafter, at time point B, an optimization method is changed, and optimization method B corresponding to optimization_info_B is applied to frame 4. In addition, the optimization method B is also applied to frames 5 to 8 subsequent to frame 4 in an input/output order.

Frames 0 to 8 optimized by the optimization method A or B are sequentially transmitted from an optimizer to an encoder.

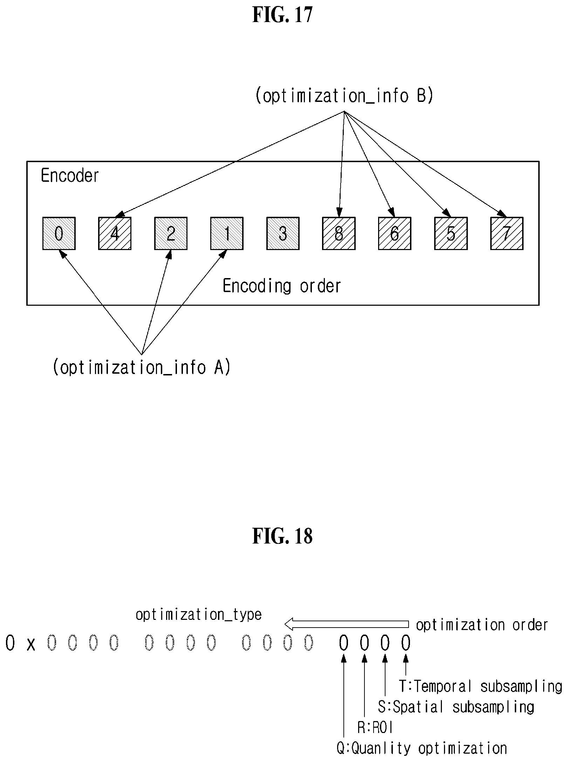

FIG. 17 is a diagram representing a process of encoding the optimized input source of FIG. 16.

Referring to FIG. 17, the encoding order (and decoding order) of an input source may be different from an order transmitted from an optimizer. For example, in FIG. 17, an optimized input source may be encoded in the order of 'Frame 0 → Frame 4 → Frame 2 → Frame 1 → Frame 3 → Frame 8 → Frame 6 → Frame 5 → Frame 7'. As such, since the encoding order of an input source may be different from an input/output order, a time point when an optimization method is changed may also be different during an optimization process and an encoding process. Specifically, in the example of FIG. 16, the discontinuity of an optimization method occurs only at time point B (i.e., a time point of frame 3 → frame 4), but in the example of FIG. 17, the discontinuity of an optimization method may occur at each of three time points (i.e., time points of frame 0 → frame 4, frame 4 → frame 2, and frame 3 → frame 8).

When frame 4 is encoded, only frame 0 may be referenced. However, because optimization methods applied to the two frames are different, the property of information may also be different. Accordingly, it may be inappropriate to refer to frame 0 in order to encode frame 4. In addition, when frame 2 is encoded, there is no problem in referring to frame 0 to which the same optimization method is applied, but it may be inappropriate to refer to frame 4 to which a different optimization method is applied. Accordingly, an encoder must be able to know whether an optimization method is the same between an encoding target frame and reference candidate frame(s). Accordingly, information for identifying an optimization method applied to each frame of an input source may be defined. The example of a syntax structure including the identification information is the same as in Tables 21 and 22.

[Table 21]

| input_optimization_info(payloadSize ) { | Descriptor |
|---|---|
| info_id | |
| optimization_info() | |
| } | |

[Table 22]

| picture_parameter_set_rbsp( ) { | Descriptor |
|---|---|
| ... | |
| info_id | u(1) |
| ... | |
| } | |

First, referring to Table 21, input_optimization_info( ) may include a syntax element info_id. A syntax element info_id may be information for identifying preprocessing information optimization_info( ) (see Tables 1-2 and 7-10) transmitted from an optimizer. In an example, a value of info_id may be defined based on the reception order of optimization_info( ). For example, a value of info_id for optimization_info( ) received first by an encoder may be 0, and a value of info_id for optimization_info( ) received second may be 1. In another example, a value of info_id may also be defined based on whether the information of optimization_info( ) is changed. For example, when optimization_info( ) received first by an encoder and optimization_info( ) received second include the same information, a value of info_id may be 0 for both. On the contrary, when optimization_info( ) received second by an encoder and optimization_info( ) received third include different information, a value of info_id for optimization_info( ) received third may be 1.

Next, referring to Table 22, picture_parameter_set_rbsp( ) may include a syntax element info_id. Table 22 is a method for including the above-described info_id in the existing syntax structure, not defining a new syntax structure like Table 21. According to Table 22, the identification information of an optimization method may be defined in a picture unit. Of course, unlike Table 22, it is also possible to define the identification information in a specific unit other than a picture (e.g., a frame group).

Meanwhile, the same optimization method may be considered applied until new identification information is received. In this case, optimization information for consecutive frames in an input/output order may be obtained (or inferred) from the most recently received optimization_info( ) until new optimization_info( ) is received.

Tables 23 and 24 represent an example of a method for expressing input_optimization_info( ) in Table 22 described above.

[Table 23]

| nal_unit_type | Name of nal_unit_type | Content of NAL unit and RBSP syntax structure | NAL unit type class |
|---|---|---|---|
| 26 | PPI_NUT | Pre-processinng information<br>input_optimization_info () | Non-VCL |

[Table 24]

| sei_payload( payloadType, payloadSize ) { | Descriptor |
|---|---|
| if( nal_unit_type == PREFIX_SEI_NUT ) | |
| if( payloadType == 0 ) | |
| ... | |
| else if( payloadType == 204 ) /* Specified in Rec. ITU-T H.274 \| ISO/IEC 23002-7 */ | |
| sample_aspect_ratio_info( payloadSize ) | |
| else if( payloadType == 205 ) | |
| input_optimization_info () ( payloadSize ) | |
| else | |
| reserved_message( payloadSize ) | |
| else /* nal_unit_type == SUFFIX_SEI_NUT */ | |
| ... | |
| if( more_data_in_payload( ) ) { | |
| ... | |
| } | |
| } | |

input_optimization_info( ) may be defined as a new NAL unit type, as in Table 23. Alternatively, input_optimization_info( ) may also be defined through a supplemental enhancement information (SEI) message, as in Table 24. In Table 24, the payload type value (i.e., 205) of input__optimization_info( ) is just an example, and may be determined as an arbitrary value.

Meanwhile, when each frame of an input source has different info_id, predetermined identification information may be additionally defined to minimize inefficiency during a reference process.

In an example, the additionally defined identification information may include optimization_compensation_flag. optimization_compensation_flag may represent whether to compensate for a property difference between an encoding target frame and a reference frame due to a difference in an optimization method (e.g., when an info_id value is different or when a different method is applied for each ROI area). For example, optimization_compensation_flag of the first value (e.g., 1) may represent that a compensation operation is performed between an encoding target frame and a reference frame. On the contrary, optimization_compensation_flag of the second value (e.g., 0) may represent that a compensation operation is not performed between an encoding target frame and a reference frame. optimization_compensation_flag may be defined in a frame unit through a picture header or a picture parameter set, etc. or may also be defined in a frame group unit through a sequence parameter set, a picture group header, etc.

In another example, the additionally defined identification information may include constrained_prediction_flag. constrained_prediction_flag may represent whether a predetermined reference constraint is applied. For example, constrained_prediction_flag of the first value (e.g., 1) may represent that the reference constraint is applied. Here, the example of the reference constraint may include a priority restriction (e.g., a reference candidate frame to which a different optimization method is applied is referenced with a lower priority), a restricted reference (e.g., texture information of a reference candidate frame to which a different optimization method is applied is not referenced), etc. On the contrary, constrained_prediction_flag of the second value (e.g., 0) may represent that the reference constraint is not applied. constrained_prediction_flag may be defined in a frame unit through a picture header or a picture parameter set, etc. or may also be defined in a frame group unit through a sequence parameter set, a picture group header, etc.

According to Embodiment 1 of the present disclosure, a preprocessing operation based on a predetermined

optimization method may be performed on the input source of VCM. Various information and interfaces for expressing, identifying and transmitting the optimization method may be defined. In addition, an encoding method (e.g., a reference constraint) considering the optimization method may be provided. Through such a preprocessing operation (an optimization process), noise included in the input source may be effectively removed and necessary information may be further enhanced to match a task property and purpose.

## Embodiment 2

A plurality of optimization methods may be applied to one input source. In this case, when the application order of a plurality of optimization methods is not defined, the inefficiency of an optimization process may occur. For example, when temporal resampling is performed after spatial resampling, a problem occurs that unnecessary spatial resampling is performed even for information that is scheduled to be removed through temporal resampling. In addition, an impact between different optimization methods needs to be considered during an optimization process. For example, area information defined during an ROI-based optimization process may be reused for adaptive processing per area during a quality optimization process. In addition, when a post-processing process is required (e.g., conversion to an original input frame rate, conversion to the original input resolution, etc.), an optimization application order needs to be defined for more efficient post-processing.

Accordingly, according to Embodiment 2 of the present disclosure, when a plurality of optimization methods are applied to one input source, various methods for defining an application order among the plurality of optimization methods may be provided.

FIG. 18 is a diagram the application order of an optimization method according to an embodiment of the present disclosure.

Referring to FIG. 18, a different optimization method may be allocated to each bit of the above-described optimization_type. For example, temporal resampling may be allocated to the least significant bit (LSB) of optimization_type, spatial resampling may be allocated to the second LSB, an ROI-based optimization method may be allocated to the third LSB and a quality optimization method may be allocated to the fourth LSB, respectively. In this case, the plurality of optimization methods may be applied in the ascending order of bits, starting from temporal resampling allocated to the LSB. Alternatively, the plurality of optimization methods may also be applied in the descending order of bits, starting from a quality optimization method allocated to the fourth LSB. In this way, according to an embodiment, an application order among a plurality of optimization methods may be determined, and optimization_type may be defined based on the application order. In this case, there is no need to separately define information related to the application order.

Meanwhile, when the definition of optimization_type based on the application order is impossible or the application order may be changed, information related to the application order needs to be defined. Accordingly, in an embodiment, information related to the application order may be additionally defined in the above-described preprocessing information optimization_info( ) (see Tables 1-2 and 7-10). A specific example thereof is the same as in Tables 25 to 27.

[Table 25]

| optimization_info(payloadSize ) { | Descriptor |
|---|---|
| ... | |
| num_of_optimization | |
| if(num_of_optimization>0){ | |
| ordering_criterion_idc | |
| if(ordering_criterion_idc==2) | |
| for( i = 0; i < num_of_optimization; i++ ) | |
| alternative_ordering[i] | |
| } | |
| } | |

[Table 26]

| Ordering_criterion_idc | Description |
|---|---|
| 00 | Ordering in LSB-based application order |
| 01 | Ordering in MSB-based application order |
| 10 | Define alternative ordering |
| 11 | No criterion for application order |

First, referring to Table 25, optimization_info( ) may include syntax elements num_of_optimization and ordering_criterion_idc.

A syntax element num_of_optimization may represent the number of optimization methods applied to an input source. In an embodiment, num_of_optimization may be derived from predefined optimization_type. In this case, num_of_optimization, for example, may be set to be the same as the number of bit(s) with a value of 1 in optimization_type.

A syntax element ordering_criterion_idc may represent criterion information related to the application order of a plurality of optimization methods. Table 26 represents an example of ordering_criterion_idc. Referring to Table 26 along with Table 25, when an ordering_criterion_idc value is '00', a plurality of optimization methods may be applied in the LSB order of optimization_type. When an ordering_criterion_idc value is '01', a plurality of optimization methods may be applied in the MSB order of optimization_type. When an ordering_criterion_idc value is '10', a separate application order (alternative_ordering) may be defined. When an ordering_criterion_idc value is '11', a plurality of optimization methods may be applied in an arbitrary order.

[Table 27]

| optimization_info(payloadSize ) { | Descriptor |
|---|---|
| ... | |
| num_of_optimization | |
| if(num_of_optimization>0){ | |
| alternative_ordering_flag | |
| if(alternative_ordering_flag) | |
| for( i = 0; i < num_of_optimization; i++ ) | |
| alternative_ordering[i] | |
| } | |
| } | |

Next, referring to Table 27, optimization_info( ) may include syntax elements num_of_optimization, ordering_criterion_idc and alternative_ordering_flag. Syntax elements num_of_optimization and ordering_criterion_idc are the same as described above by referring to Table 25.

A syntax element alternative_ordering_flag may represent whether the application order of a plurality of optimization methods is separately defined. For example, alternative_ordering_flag of the first value (e.g., 1) may represent that the application order is separately defined. On the contrary, alternative_ordering_flag of the second value (e.g., 0) may represent that the application order is not separately applied. Unlike Table 28, alternative_ordering_flag may be defined only when a plurality of optimization methods are applied to an input source (i.e., num_of_optimization > 1). In addition, when a basic application order is defined in advance based on the MSB or LSB, alternative_ordering_flag may not be defined.

Table 28 represents an example of information utilization between optimization methods.

[Table 28]

| quality_optimization_info () | Descriptor |
|---|---|
| { | |
| | |
| If( optimization_type& 0x04 ) != 0){ | |
| if(ROI_info_flag){ | |
| **adaptive_quality_optimization_flag** | |
| if(adaptive_quality_optimization_flag){ | |
| for( i = 0; i < num_of_ROI; i++ ) | |
| { | |
| **optimization_types[i]** | |
| **optimization_methods[i]** | |
| } | |
| } | |
| } | |
| } | |
| **optimization_type** | |
| **optimization_method** | |

Referring to Table 28, quality_optimization_info( ) regarding a quality optimization method may include syntax elements adaptive_quality_optimization_flag, optimization_types[i], optimization_methods[i], optimization _type and optimization_method.

A syntax element adaptive_quality_optimization_flag may represent whether an adaptive quality optimization method is applied to an ROI area. For example, adaptive_quality_optimization _flag of the first value (e.g., 1) may represent that an adaptive quality optimization method is applied to an ROI area. On the contrary, adaptive_quality_optimization_flag of the second value (e.g., 0) may represent that an adaptive quality optimization method is not applied to an ROI area. adaptive_quality_optimization _flag may be defined only when ROI-based optimization application is included in optimization _type (i.e., ( optimization _type & 0x04 ) != 0). In addition, adaptive_quality_optimization_flag may be defined only when ROI-related detailed information is defined (i.e., ROI_info_flag = True).

A syntax element optimization_methods[i] may represent an optimization method applied to each ROI area. A value of optimization_methods[i] may also be defined by using region_property included in ROI_info( ) in Table 13 described above. In this case, a different optimization method may be applied based on a property (e.g., an ROI vs a non-ROI) or importance for each area.

A syntax element optimization _types[i] may represent the property of an optimization method applied for each ROI area. A value of optimization_types[i] may also be defined by using region_property included in ROI_info( ) in Table 13 described above. In this case, a different optimization property may be applied based on a property (e.g., an ROI vs a non-ROI) or importance for each area. For example, an optimization property aimed at removing unnecessary information (or, noise) may be applied to an area with low importance, and an optimization property aimed at enhancing necessary information may be applied to an area with high importance.

A syntax element optimization _type may be the property information of an applied optimization method. The purpose of optimization may be to remove noise or strengthen or weaken specific property information. In addition, an optimization method may change the semantic information of an input source. Accordingly, an information consumer may use the property information of the optimization method to determine whether a corresponding optimization method is suitable for a task purpose and its impact.

A syntax element optimization_method_idc may be the identification information of an applied optimization method. Even an optimization method with the same purpose and similar properties may be implemented and applied in different ways. For example, an optimization method may be defined differently according to the operating conditions and performance of a device to be applied. Accordingly, an information consumer may use the identification information of the optimization method to specifically confirm a tool used for a corresponding optimization method. An example of optimization_method_idc is the same as described above by referring to Table 19.

According to Embodiment 2 of the present disclosure, various methods for defining an application order among a plurality of optimization methods may be provided. Accordingly, the efficiency of an optimization process, and further, a post-processing process on a receiving side, may be further improved.

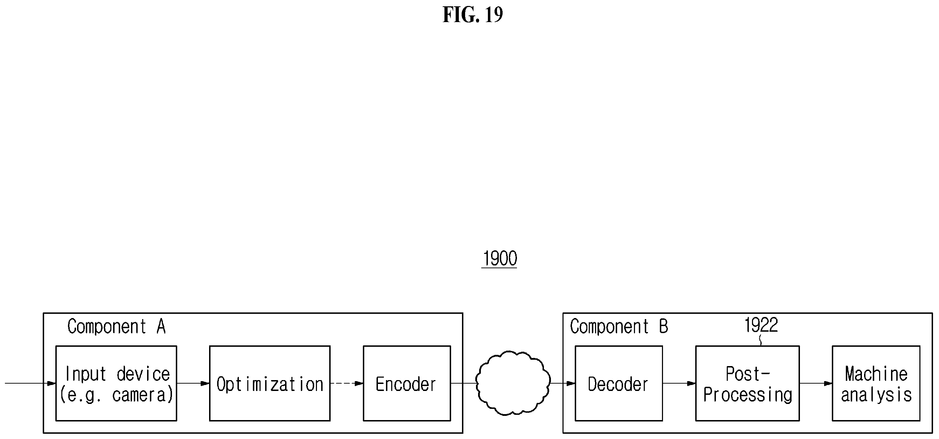

Meanwhile, a post-processing process corresponding to the optimization (or, pre-processing) process of Embodiments 1 and 2 described above may be performed in an apparatus on a receiving side. To this end, an apparatus on a receiving side may further include the post-processor 1922, as illustrated in FIG. 19. The post-processor 1922 may

identify an optimization method and property applied to an input source based on optimization information obtained from a bitstream and determine a specific post-processing method identical to or corresponding to the identified optimization method and property. In addition, the post-processor 1922 may post-process decoded image data based on the determined post-processing method.

## Embodiment 3

The optimization methods of Embodiments 1 and 2 described above may be defined differently according to the purpose of an apparatus on a receiving side. It is because necessary information may vary depending on the consumption purpose of information in a VCM system. Accordingly, an interface for an apparatus on a receiving side to request an appropriate optimization method from an apparatus on a transmitting side needs to be defined. In addition, since an optimization method and an expression method thereof (optimization information) may be changed according to the request of an apparatus on a receiving side, the interface must correspond to an interface defined between the optimizer and encoder of an apparatus on a transmitting side. Accordingly, Embodiment 3 of the present disclosure provides an interface between an apparatus on a receiving side and an apparatus on a transmitting side for an optimization operation.

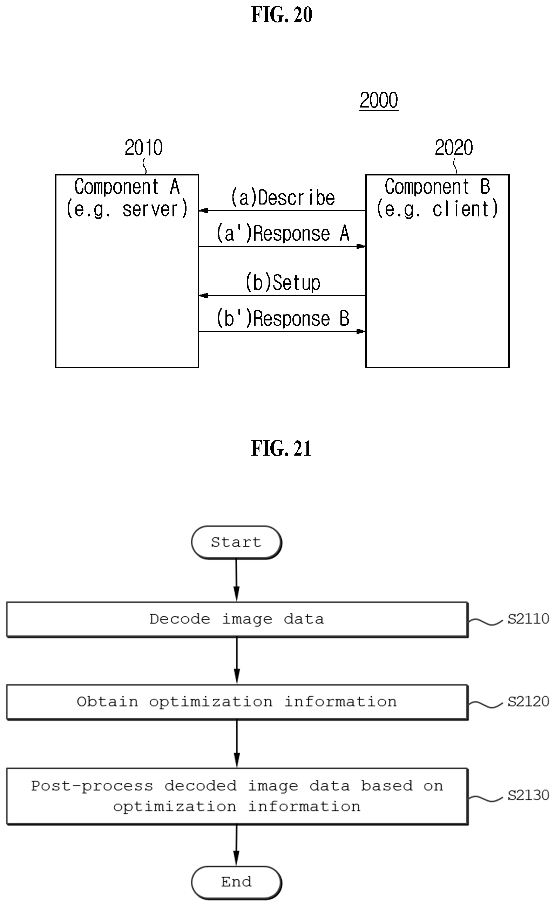

FIG. 20 is a diagram for describing the setting process of an optimization method according to an embodiment of the present disclosure.

Referring to FIG. 20, the second apparatus 2020 (e.g., a client) must be able to know information related to an optimization method that may be applied to the first apparatus 2010 (e.g., a server). To this end, the second apparatus 2020 may request the first apparatus 2010 to transmit information related to an applicable optimization method through a describe function (a). In this case, the first apparatus 2010 may transmit information related to the applicable optimization method to the second apparatus 2020 through a response A function (a').

In addition, the second apparatus 2020 must be able to request the first apparatus 2010 to apply an optimization method (including change/application cancellation, etc.). To this end, the second apparatus 2020 may request the first apparatus 2010 to apply an optimization method through a setup function (b). In this case, the first apparatus 2010 may apply an optimization method and transmit information related to the applied optimization method to the second apparatus 2020 through a response B function (b').

The above-described functions may be implemented through an interface (INF) between the first apparatus 2010 and the second apparatus 2020. In addition, the above-described functions may also be implemented by extending/applying an existing protocol (e.g., RTSP/RTCP/WebRTC, etc.) or defining a new protocol.

The example of information transmitted through the response A function is the same as in Table 29.

[Table 29]

| available_optimization_info() { | **Descriptor** |
|---|---|
| **available_optimization_type** | |
| } | |

Referring to Table 29, available_optimization_info( ) for the response A function may include a syntax element available_optimization_type. available_optimization_type represents an available optimization property. The example of the available optimization property is the same as in Table 30.

[Table 30]

| Value | Interpretation |
|---|---|
| available_optimization_type = = 0 | May be used as determined by the application |
| available_optimization_type > 0 && ( available_optimization_type & 0x01 ) = = 0 | Temporal resampling is disavailable |
| (available_optimization_type & 0x01 ) != 0 | Temporal resampling is available |
| available_optimization _type> 0 && ( available_optimization _type& 0x02 ) = = 0 | Spatial resampling is disavailable |
| ( available_optimization _type& 0x02 ) != 0 | Spatial resampling is available |
| available_optimization _type> 0 && ( available_optimization _type& 0x04 ) = = 0 | ROI-based optimization is disavailable |
| ( available_optimization _type& 0x04 ) != 0 | ROI-based optimization is available |
| available_optimization _type> 0 && ( available_optimization _type& 0x08 ) = = 0 | Quality optimization is disavailable |
| ( available_optimization _type& 0x08 ) != 0 | Quality optimization is available |

Referring to Table 30, when 'available_optimization_type == 0' is True, an optimization method determined by an application may be used as is. When 'available_optimization_type > 0 && ( available_optimization _type & 0x01 ) == 0' is True, temporal resampling may not be available as an optimization method. When '( available_optimization_type & 0x01 ) != 0' is True, temporal resampling may be available as an optimization method. When 'available_optimization_type > 0 && ( available_optimization _type & 0x02 ) == 0' is True, spatial resampling may not be available as an optimization method. When '( available_optimization_type & 0x02 ) != 0' is True, spatial resampling may be available as an optimization method. When 'available_optimization_type > 0 && ( available_optimization _type & 0x04 ) == 0' is True, a region of interest(ROI)-based optimization method may not be available. When '( available_optimization _type & 0x04 ) != 0' is True, an ROI-based optimization method may be available. When 'available_optimization_type > 0 && ( available_optimization _type & 0x08 ) == 0' is True, quality optimization may not be available. When '( available_optimization _type & 0x08 ) != 0' is True, quality optimization may be available.

According to an embodiment, information transmitted through the response A function may be defined through an existing protocol such as RTSP or RTCP, etc. unlike Tables 29 and 30 described above. A specific example thereof is the same as in Table 31.

[Table 31]

```
S->C:
     Optimization-Type: Temporal_subsampling/spatial_subsampling/ROI/Quality_optimization
```

Meanwhile, an example of information required when requesting the deactivation of an optimization setting is the same as in Table 32.

[Table 32]

| deactivation_request() { | Descriptor |
|---|---|
| ... | |
| } | |

For the deactivation request of an optimization setting, unlike an activation request, information related to a deactivation target may be unnecessary. Accordingly, as in Table 32, only a deactivation request message may be defined. In this case, the application of all optimization method(s) applied to an input source may be canceled.

Another example of information required when requesting the deactivation of an optimization setting is the same as in Table 33.

[Table 33]

| deactivation_request() { | Descriptor |
|---|---|
| ... | |
| **deactivate_all_optimization_flag** | u(1) |
| if(!**deactivate _all_optimization_flag**){ | |
| deactivate_optimization_type | |
| } | |
| } | |

Referring to Table 33, deactivation_request( ) may include syntax elements deactivate_all_optimization _flag and deactivate_optimization_type.

A syntax element deactivate_all_optimization _flag may represent whether an optimization setting is selectively deactivated. For example, deactivate_all_optimization _flag of the first value (e.g., 1) may represent a request to deactivate all optimization settings. On the contrary, deactivate_all_optimization_flag of the second value (e.g., 0) may represent a request to partially (selectively) deactivate optimization settings.

A syntax element deactivate_optimization_type may represent an optimization setting to be deactivated. deactivate_optimization_type may be defined only when a selective deactivation request exists, i.e., when deactivate_all_optimization_flag has the second value (e.g., 0). The example of the selective deactivation request is the same as in Table 34.

[Table 34]

| Value | Interpretation |
|---|---|
| deactivate_optimization_type = = 0 | May be used as determined by the application |
| deactivate_optimization_type > 0 && ( deactivate_optimization_type & 0x01 ) = = 0 | No change in current status. |
| (deactivate _optimization_type & 0x01 ) != 0 | Request to disable temporal resampling |
| deactivate _optimization _type> 0 && ( deactivate _optimization _type& 0x02 ) = = 0 | No change in current status. |
| ( deactivate _optimization _type& 0x02 ) != 0 | Request to disable spatial resampling |
| deactivate _optimization _type> 0 && ( deactivate _optimization _type& 0x04 ) = = 0 | No change in current status. |
| ( deactivate _optimization _type& 0x04 ) != 0 | Request to disable ROI-based optimization |
| deactivate _optimization _type> 0 && ( deactivate _optimization _type& 0x08 ) = = 0 | No change in current status. |
| ( deactivate _optimization _type& 0x08 ) != 0 | Request to disable quality optimization |

Referring to Table 34, when 'deactivate_optimization_type == 0' is True, an optimization method determined by an application may be used as is. When 'deactivate_optimization_type > 0 && ( deactivate_optimization _type & 0x01 ) == 0' is True, there may be no change in the current state. When '( deactivate_optimization_type & 0x01) != 0' is True, a deactivation request may relate to temporal resampling. When 'deactivate_optimization_type > 0 && ( deactivate_optimization_type & 0x02 ) == 0' is True, there may be no change in the current state. When '( deactivate_optimization_type & 0x02 ) != 0' is True, a deactivation request may relate to spatial resampling. When 'deactivate_optimization_type > 0 &&

( deactivate_optimization_type & 0x04 ) == 0' is True, there may be no change in the current state. When '( deactivate_optimization_type & 0x04 ) != 0' is True, a deactivation request may relate to an ROI-based optimization method. When 'deactivate_optimization_type > 0 && ( deactivate_optimization_type & 0x08 ) == 0' is True, there may be no change in the current state. When '( deactivate_optimization_type & 0x08 ) != 0' is True, a deactivation request may relate to quality optimization.

According to an embodiment, information required when requesting the deactivation may also be defined through an existing protocol such as RTSP or RTCP, etc. unlike Tables 32 to 34 described above. In this case, optimization methods to be deactivated are listed as in Table 35.

[Table 35]

```
C->S: SETUP
      deactivation_request: Temporal_subsampling/spatial_subsampling/ROI/Quality_optimization
```

Meanwhile, it is also possible to request the selective activation of an optimization setting. The example of information required when requesting the selective activation is the same as in Table 36.

[Table 36]

| activation_request() { | Descriptor |
|---|---|
| ... | |
| **optimization_type** | |
| if(( optimization_type& 0x04 ) != 0){ | |
| **ROI_info_flag** | |
| if(ROI_info_flag){ | |
| **ROI_info**() | |
| } | |
| } | |
| if(( optimization_type& 0x01 ) != 0){ | |
| **temporal_optimization_info_flag** | |
| if(temporal_ optimization info_flag){ | |
| **temporal_ optimization info()** | |
| } | |
| } | |
| if(( optimization_type& 0x02 ) != 0){ | |
| **spatial_optimization_info_flag** | |
| if(spatial_ optimization info_flag){ | |
| **spatial_ optimization info**() | |
| } | |
| } | |
| if(( optimization_type& 0x08 ) != 0){ | |
| **quality_optimization_info_flag** | |
| if(quality_optimization_info_flag){ | |
| **quality_optimization_info** () | |
| } | |
| } | |
| } | |
| | |
| } | |

According to Embodiment 3 of the present disclosure, an interface for optimization control may be defined between an apparatus on a transmitting side and an apparatus on a receiving side in VCM. In this case, the control (particularly, a deactivation request) may be performed individually for each optimization method or may also be performed together for all optimization methods. Accordingly, appropriate optimization control according to the purpose of an

apparatus on a receiving side may be possible.

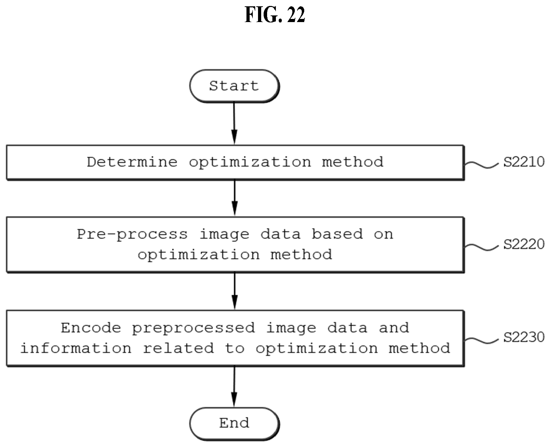

Hereinafter, referring to FIGS. 21 and 22, an image data processing method according to an embodiment of the present disclosure will be described in detail.

FIG. 21 is a flowchart representing an image data processing method according to an embodiment of the present disclosure. An image data processing method in FIG. 21 may be performed by a receiving apparatus.

Referring to FIG. 21, a receiving apparatus may decode image data obtained from a bitstream S2110. In addition, a receiving apparatus may obtain information related to the optimization method of the image data S2120 and post-process the decoded image data based on the obtained information related to the optimization method S2130. In this case, information related to the optimization method may include optimization property information representing the type of at least one optimization method applied to the image data.

In an embodiment, the types of the optimization method may include temporal resampling, spatial resampling, region of interest(ROI)-based optimization and quality optimization.

In an embodiment, information related to the optimization method may further include information representing the type number of an optimization method applied to the image data.

In an embodiment, information related to the optimization method may further include optimization purpose information representing the purpose of at least one optimization method applied to the image data. Here, the purpose of the optimization method may include object detection, object tracking, object segmentation, face recognition, human viewing and machine analysis.

In an embodiment, information related to the optimization method may further include information representing the number of purposes of an optimization method applied to the image data.

In an embodiment, when a region of interest(ROI)-based optimization method is applied to the image data, information related to the optimization method may further include information representing the property of each area included in the original image of the image data.

In an embodiment, information related to the optimization method further includes information related to a general information change of the image data, and information related to the general information change may be used to reconstruct the decoded image data.

In an embodiment, when a plurality of optimization methods are applied to the image data, information related to the optimization method may further include information representing the type of a tool used for each of the plurality of optimization methods.

In an embodiment, when a plurality of optimization methods are applied to the image data, information related to the optimization method may further include information related to the application order of the plurality of optimization methods.

In an embodiment, information related to the optimization method may further include information representing the type of an optimization method available for the image data. In this case, the available optimization method may be controlled individually based on the selective deactivation request of the receiving apparatus.

FIG. 22 is a flowchart representing an image data processing method according to an embodiment of the present disclosure. An image data processing method in FIG. 22 may be performed by a transmitting apparatus.

Referring to FIG. 22, a transmitting apparatus may determine the optimization method of image data S2210 and preprocess the image data based on the determined optimization method S2220. In addition, a transmitting apparatus may encode the preprocessed image data and information related to the optimization method S2230. In this case, information related to the optimization method may include optimization property information representing the type of at least one optimization method applied to the image data.

Meanwhile, information related to an optimization method encoded by a transmitting apparatus may be included in a bitstream. The bitstream may be stored on a non-transitory computer-readable recording medium and transmitted to a receiving apparatus through a communication means (e.g., a wired/wireless network).

Although exemplary methods of the present disclosure are expressed as a series of operations for the clarity of explanation, this is not intended to limit the order in which steps are performed, and if necessary, each step may be performed simultaneously or in different order. In order to implement a method according to the present disclosure, another step may be additionally included in an exemplary step or the remaining steps may be included excluding some steps or another additional step may be included excluding some steps.

In the present disclosure, an image encoding apparatus or an image decoding apparatus performing a predetermined operation (step) may perform an operation (a step) for checking a condition or a situation for performing a corresponding operation (step). For example, when it is stated that a predetermined operation is performed when a predetermined condition is satisfied, an image encoding apparatus or an image decoding apparatus may perform an operation for checking whether the predetermined condition is satisfied, and then perform the predetermined operation.

The various embodiments of the present disclosure do not list all possible combinations, but are intended to describe the representative aspect of the present disclosure, and matters described in various embodiments may be applied independently or in a combination of at least two.

Embodiments described in the present disclosure may be implemented and performed on a processor, a microprocessor, a controller or a chip. For example, functional units shown in each diagram may be implemented and performed on a computer, a processor, a microprocessor, a controller or a chip. In this case, information (e.g., information on instructions) or an algorithm for implementation may be stored in a digital storage medium.

In addition, a decoder (a decoding apparatus) and an encoder (an encoding apparatus) to which embodiment(s) of the present disclosure are applied may be included in a multimedia broadcasting transmitting and receiving device, a mobile communication terminal, a home cinema video device, a digital cinema video device, a surveillance camera, a video communication device, a real-time communication device such as a video communication, etc., a mobile streaming device, a storage medium, a camcorder, a video-on-demand (VoD) service providing device, an OTT video (Over the top video) device, an Internet streaming service providing device, a three-dimensional (3D) video device, a virtual reality (VR) device, an augmented reality (AR) device, a video phone video device, a transportation terminal (e.g., a vehicle (including an autonomous vehicle) terminal, a robot terminal, an airplane terminal, a ship terminal, etc.), a medical video device, etc., and may be used to process a video signal or a data signal. For example, an OTT video (Over the top video) device may include a game console, a Blu-ray player, an Internet-connected TV, a home theater system, a smartphone, a tablet PC, a digital video recorder (DVR), etc.

In addition, a processing method to which embodiment(s) of the present disclosure are applied may be produced in the form of a program executed by a computer and may be stored in a computer-readable recording medium. Multimedia data having a data structure according to embodiment(s) of the present disclosure may also be stored in a computer-readable recording medium. A computer-readable recording medium includes all types of storage devices and distributed storage devices where computer-readable data is stored. A computer-readable recording medium may include, for example, a Blu-ray disc (BD), a universal serial buse (USB), ROM, PROM, EPROM, EEPROM, RAM, CD-ROM, a magnetic tape, a floppy disk and an optical data storage device. In addition, a computer-readable recording medium includes media implemented in the form of a carrier (e.g., transmission via the Internet). In addition, a bitstream generated by an encoding method may be stored in a computer-readable recording medium or may be transmitted through a wired or wireless communication network.

In addition, embodiment(s) of the present disclosure may be implemented as a computer program product by a program code, and a program code may be executed on a computer by embodiment(s) of the present disclosure. A program code may be stored on a computer-readable carrier.

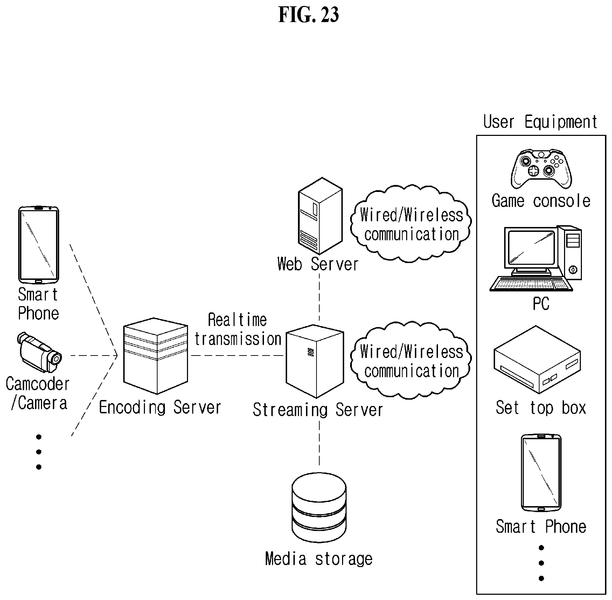

FIG. 23 is a diagram showing an example of a content streaming system to which embodiments of the present disclosure may be applied.

Referring to FIG. 23, the content streaming system to which an embodiment of the present disclosure is applied may broadly include an encoding server, a streaming server, a web server, a media storage, a user device, and a multimedia input device.

An encoding server compresses content input from multimedia input devices such as a smartphone, camera, or camcorder into digital data, generating a bitstream and transmitting it to a streaming server. As another example, when multimedia input devices such as a smartphone, camera, or camcorder directly generate a bitstream, an encoding server may be omitted.

A bitstream may be generated by an image encoding method and/or an image encoding apparatus to which an embodiment of the present disclosure is applied, and a streaming server may temporarily store a bitstream during the process of transmitting or receiving a bitstream.

A streaming server may transmit multimedia data to a user device based on a user request through a web server, and a web server may serve as an intermediary that informs a user of available service. When a user requests a desired service from a web server, a web server may send it to a streaming server, and a streaming server may transmit multimedia data to a user. In this case, a content streaming system may include a separate control server, and in this case, a control server may function to control a command/a response between devices within a content streaming system.

A streaming server may receive a content from a media storage and/or an encoding server. For example, when receiving a content from an encoding server, a content may be received in real time. In this case, to provide a seamless streaming service, a streaming server may store a bitstream for a certain period of time.

Examples of a user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, a digital signage, etc.

Each server within a content streaming system may be operated as a distributed server, in which case data received by each server may be processed in a distributed manner.

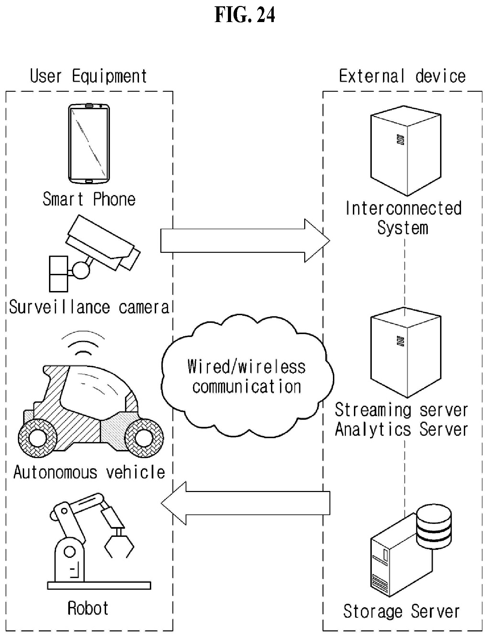

FIG. 24 is a diagram showing another example of a content streaming system to which embodiments of the present disclosure may be applied.

Referring to FIG. 24, in an embodiment such as VCM, a task may be performed by a user terminal or a task may be performed by an external device (e.g., a streaming server, an analysis server, etc.) according to the performance of a

device, a user's request, the characteristics of a task to be performed, etc. In this way, in order to transmit information necessary for performing a task to an external device, a user terminal may generate directly or through an encoding server a bitstream including information necessary for performing a task (e.g., information such as a task, a neural network and/or usage).

An analysis server may perform a task requested by a user after decoding encoded information transmitted from a user terminal (or, from an encoding server). An analysis server may transmit a result obtained by performing a task to a user terminal again or to another linked service server (e.g., a web server). For example, an analysis server may transmit a result obtained by performing a task for determining a fire to a firefighting-related server. An analysis server may include a separate control server, in which case a control server may play a role in controlling a command/a response between each device associated with an analysis server and a server. In addition, an analysis server may request desired information from a web server based on information about a task that a user device wants to perform and a task that a user device may perform. When an analysis server requests a desired service from a web server, a web server may transmit it to an analysis server, and an analysis server may transmit data therefor to a user terminal. In this case, the control server of a content streaming system may play a role in controlling a command/a response between each device within a streaming system.

[Industrial Applicability]

An embodiment according to the present disclosure may be used to process image data.

## Claims

1. An image data processing method performed by a receiving apparatus, comprising:

   decoding image data obtained from a bitstream;
   obtaining information related to an optimization method of the image data; and
   post-processing the decoded image data based on the information related to the optimization method,
   wherein the information related to the optimization method includes optimization property information representing a type of at least one optimization method applied to the image data.

2. The method of claim 1, wherein the type of the optimization method is determined for each area based on an area property of the image data.

3. The method of claim 1, wherein the image data is decoded based on inter-frame prediction, and wherein the inter-frame prediction is performed based on whether a same optimization method is applied to a current frame and a reference frame.

4. The method of claim 1, wherein the information related to the optimization method further includes information representing a type number of the optimization method applied to the image data.

5. The method of claim 1, wherein the information related to the optimization method further includes optimization purpose information representing a purpose of the at least one optimization method applied to the image data.

6. The method of claim 5, wherein the information related to the optimization method further includes information representing a number of optimization purposes applied to the image data.

7. The method of claim 1, wherein based on a region of interest(ROI)-based optimization method being applied to the image data, the information related to the optimization method further includes information representing a property of each area included in the image data.

8. The method of claim 1, wherein the information related to the optimization method further includes information related to a general information change of the image data, and the information related to the general information change is used to reconstruct the decoded image data.

9. The method of claim 1, wherein based on a plurality of optimization methods being applied to the image data, the information related to the optimization method further includes information representing a tool type used for each of the plurality of optimization methods.

**10.** The method of claim 1, wherein based on a plurality of optimization methods being applied to the image data, the information related to the optimization method further includes information related to an application order of the plurality of optimization methods.

**11.** The method of claim 1, wherein the information related to the optimization method further includes information representing a type of an optimization method available for the image data.

**12.** The method of claim 11, wherein the available optimization method is controlled individually based on a selective deactivation request of the receiving apparatus.

**13.** An image data processing method performed by a transmitting apparatus, comprising:

determining an optimization method of image data;
pre-processing the image data based on the optimization method; and
encoding the pre-processed image data and information related to the optimization method,
wherein the information related to the optimization method includes optimization property information representing a type of at least one optimization method applied to the image data.

**14.** The method of claim 13, a computer-readable recording medium storing a bitstream generated by the processing method.

**15.** A method for transmitting a bitstream generated by an image data processing method, the image data processing method comprising:

determining an optimization method of image data;
pre-processing the image data based on the optimization method; and
encoding the pre-processed image data and information related to the optimization method,
wherein the information related to the optimization method includes optimization property information representing a type of at least one optimization method applied to the image data.

FIG. 1

10
20
11
23
FEATURE OBTAINER
TASK ANALYSIS/
RENDERING UNIT
12
22
ENCODER
DECODER
13
21
TRANSMITTER
RECEIVER

FIG. 2

Image/Video
Image/Video Encoder
211
Image/Video Decoder
212
210
Reconstructed Image/Video
Human Vision
Feature Extraction Network
221
VCM Encoder
222
VCM Decoder
223
220
Reconstructed Feature/Feature map
Machine (Vision) Task

FIG. 3

300
ENCODING APPARATUS
INPUT IMAGE (PICTURE)
IMAGE PARTITIONER
310
320
INTER PREDICTOR
321
INTRA PREDICTOR
322
DPB
MEMORY
370
FILTER
360
331
+
-
330
TRANSFORMER
332
QUANTIZER
333
ENTROPY ENCODER
340
BITSTREAM
DEQUANTIZER
334
INVERSE TRANSFORMER
335
350

FIG. 4

BITSTREAM
410
DECODING APPARATUS
ENTROPY DECODER
400
420
421
DEQUANTIZER
422
INVERSE TRANSFORMER
440
450
FILTER
RECONSTRUCTED IMAGE (PICTURE)
430
431
INTRA PREDICTOR
432
INTER PREDICTOR
MEMORY
DPB
460

FIG. 5

START
PREDICT
S510
RESIDUAL PROCESS
S520
ENCODE FEATURE/FEATURE MAP INFORMATION INCLUDING PREDICTION INFORMATION AND RESIDUAL INFORMATION
S530
END

FIG. 6

START
OBTAIN FEATURE/FEATURE MAP INFORMATION FROM BITSTREAM
S610
PREDICT
S620
RESIDUAL PROCESS
S630
RECONSTRUCT FEATURE/FEATURE MAP
S640
INLOOP FILTERING (optional)
S650
END

FIG. 7

| FEATURE CODING LAYER | 710 |
| --- | --- |
| NEURAL NETWORK (FEATURE) ABSTRACTION LAYER | 720 |
| FEATURE EXTRACTION LAYER | 730 |

FIG. 8

NNAL unit header
NNAL unit payload
(RBFP: Raw Byte Feature Payload)
Group header
Group Data
Feature channel
Feature channel
Feature channel
Feature channel
Feature channel
Feature channel
Coding indicator
TYPE
PREDICTION
Side Information
Residual Data

FIG. 9

900
Context Information
Noise Addition and Variability
910
911
Input device (e.g. camera)
Noise Addition and Variability
913
Encoder
920
921
Decoder
923
Machine Task A
Machine Task A
Human
Necessary Information Variability

FIG. 10

1000
1010
Component A
1011
Input device (e.g. camera)
1012
Optimization
INF
1013
Encoder
A
B
1020
Component B
1021
Decoder
1023
Task network

FIG. 11

1100
1110
1111
Input device
(e.g. camera)
1112
Optimization
1113
Encoder
1120
1121
Decoder
1122
Task
network
1123
Optimization
manager
A
B

# FIG. 12

STEP 1
STEP 2
STEP 3
Whether optimization (e.g., pre-processing) is applied and scope
Optimization (e.g., pre-processing) property and type
Whether STEP 2 is defined
Additional information according to optimization (e.g., pre-processing) property and type
Whether STEP 3 is defined
Purpose of optimization (e.g., pre-processing)
Whether STEP 2 is defined

# FIG. 13

STEP 1
STEP 2
STEP 3
Whether optimization (e.g., pre-processing) is applied and scope
Define optimization information step
Optimization (e.g., pre-processing) property and type
Additional information according to optimization (e.g., pre-processing) property and type
Purpose of optimization (e.g., pre-processing)

# FIG. 14

topY
topX
width
height
region_info{topX,topY,width,height}

# FIG. 15

0
1
2
3
1
2
3
topUnitY
topUnitX
num_of_horizontal_unit
num_vertical_unit
region_info{topUnitX,topUnitY,
num_of_horizontal_unit,num_of_vertical_unit}

FIG. 16

Pre-processing
t
0
1
2
3
4
5
6
7
8
Encoder
Resolution Information
Color Space Information
Frame rate
Optimization_info B
A : Application Timing
Resolution Information
Color Space Information
Frame rate
Optimization_info B
B : Timing of changing the applied method

# FIG. 17

(optimization_info B)
Encoder
0
4
2
1
3
8
6
5
7
Encoding order
(optimization_info A)

# FIG. 18

optimization_type
optimization order
0 x 0 0 0 0 0 0 0 0 0 0 0 0 0 0 0 0
T:Temporal subsampling
S:Spatial subsampling
R:ROI
Q:Quanlity optimization

FIG. 19

1900
Component A
Input device
(e.g. camera)
Optimization
Encoder
Component B
Decoder
1922
Post-
Processing
Machine
analysis

FIG. 20

2000
2010
2020
Component A
(e.g. server)
Component B
(e.g. client)
(a)Describe
(a')Response A
(b)Setup
(b')Response B

FIG. 21

Start
Decode image data
S2110
Obtain optimization information
S2120
Post-process decoded image data based on optimization information
S2130
End

FIG. 22

Start
Determine optimization method
S2210
Pre-process image data based on optimization method
S2220
Encode preprocessed image data and information related to optimization method
S2230
End

# FIG. 23

User Equipment
Game console
PC
Set top box
Smart Phone
Web Server
Wired/Wireless communication
Wired/Wireless communication
Smart Phone
Camcoder /Camera
Realtime transmission
Encoding Server
Streaming Server
Media storage

FIG. 24

User Equipment
External device
Smart Phone
Surveillance camera
Autonomous vehicle
Robot
Wired/wireless communication
Interconnected System
Streaming server
Analytics Server
Storage Server

## INTERNATIONAL SEARCH REPORT

International application No. **PCT/KR2023/015442**

**A. CLASSIFICATION OF SUBJECT MATTER**

**H04N 19/85**(2014.01)i; **H04N 19/105**(2014.01)i; **H04N 19/513**(2014.01)i; **H04N 19/167**(2014.01)i

According to International Patent Classification (IPC) or to both national classification and IPC

**B. FIELDS SEARCHED**

Minimum documentation searched (classification system followed by classification symbols)

H04N 19/85(2014.01); G06T 9/00(2006.01); H04N 19/117(2014.01); H04N 19/119(2014.01); H04N 19/129(2014.01); H04N 19/147(2014.01); H04N 19/177(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 비트스트림(bitstream), 최적화(optimization), 전처리(pre-process), 후-처리(post-process), 유형(type)

**C. DOCUMENTS CONSIDERED TO BE RELEVANT**

| Category* | Citation of document, with indication, where appropriate, of the relevant passages | Relevant to claim No. |
|---|---|---|
| Y | QIU, Kaitian et al. Codec-Simulation Network for Joint Optimization of Video Coding With Pre- and Post-Processing. IEEE Open Journal of Circuits and Systems. pp. 648-659, 22 November 2021. See pages 648-652; and figures 1-2. | 1-15 |
| Y | KR 10-2023-0077602 A (ELECTRONICS AND TELECOMMUNICATIONS RESEARCH INSTITUTE) 01 June 2023 (2023-06-01) See paragraphs [0007], [0053]-[0056], [0071] and [0075]; and figure 5. | 1-15 |
| A | US 2023-0269378 A1 (TENCENT AMERICA LLC) 24 August 2023 (2023-08-24) See paragraphs [0052] and [0065]. | 1-15 |
| A | KR 10-2021-0043027 A (INTERDIGITAL VC HOLDINGS, INC.) 20 April 2021 (2021-04-20) See claims 2-7. | 1-15 |
| A | KR 10-2021-0024619 A (ZTE CORPORATION) 05 March 2021 (2021-03-05) See claims 49-97. | 1-15 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 June 2024** | **03 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015442**

| Patent document cited in search report | Publication date (day/month/year) | Patent family member(s) | Publication date (day/month/year) |
|---|---|---|---|
| KR 10-2023-0077602 A | 01 June 2023 | US 2023-0164337 A1 | 25 May 2023 |
| US 2023-0269378 A1 | 24 August 2023 | CN 117083856 A | 17 November 2023 |
| | | JP 2024-515207 A | 05 April 2024 |
| | | KR 10-2023-0158628 A | 20 November 2023 |
| | | WO 2023-163809 A1 | 31 August 2023 |
| KR 10-2021-0043027 A | 20 April 2021 | CN 107295339 A | 24 October 2017 |
| | | CN 107295339 B | 26 June 2020 |
| | | EP 3748967 A1 | 09 December 2020 |
| | | JP 2012-533215 A | 20 December 2012 |
| | | JP 5702378 B2 | 15 April 2015 |
| | | KR 10-2023-0093060 A | 26 June 2023 |
| | | KR 10-2542401 B1 | 13 June 2023 |
| | | US 11895296 B2 | 06 February 2024 |
| | | US 2023-0027586 A1 | 26 January 2023 |
| | | WO 2011-005317 A2 | 13 January 2011 |
| | | WO 2011-005317 A3 | 24 March 2011 |
| KR 10-2021-0024619 A | 05 March 2021 | CN 110650343 A | 03 January 2020 |
| | | EP 3817385 A1 | 05 May 2021 |
| | | JP 2021-532624 A | 25 November 2021 |
| | | JP 7271580 B2 | 11 May 2023 |
| | | KR 10-2569844 B1 | 28 August 2023 |
| | | US 11647196 B2 | 09 May 2023 |
| | | US 2021-0168369 A1 | 03 June 2021 |
| | | WO 2020-001210 A1 | 02 January 2020 |

Form PCT/ISA/210 (patent family annex) (July 2022)